# EUROPÄISCHE PATENTANMELDUNG

(11) **EP 3 146 874 A1**
(43) Veröffentlichungstag der Anmeldung: **29.03.2017**
(21) Anmeldenummer: 15405057.9
(22) Anmeldetag: 24.09.2015
(51) Int. Cl.: A47J 31/057, A47J 31/46, A47J 31/52

(54) **VERFAHREN ZUM ERZEUGEN EINES KAFFEEGETRÄNKS IN EINER BRÜHVORRICHTUNG EINES KAFFEEAUTOMATEN SOWIE KAFFEEAUTOMAT ZUM DURCHFÜHREN DES VERFAHRENS**

(71) Anmelder: JURA ELEKTROAPPARATE AG, 4626 Niederbuchsiten (CH)
(72) Erfinder: Sahli, Georg, 3423 Ersigen (CH); Probst, Stephan, 4553 Subingen (CH); Büttiker, Philipp, 4625 Oberbuchsiten (CH); Studer, Reinhard, 4625 Oberbuchsiten (CH)
(74) Vertreter: EGLI-EUROPEAN PATENT ATTORNEYS

(57) **Zusammenfassung**

Es werden ein Verfahren zum Erzeugen eines Kaffeegetränks in einer Brühvorrichtung (30) eines Kaffeeautomaten (10) sowie ein Kaffeeautomat (10) zum Durchführen des Verfahrens zum Erzeugen eines Kaffeegetränkes angegeben. Mit dem Ziel, eine hohe Qualität eines durch den Brühvorgang erhaltenen Kaffeegetränks bei unterschiedlichen Mahlgraden des Mahlguts zu erzielen, sieht die erfindungsgemässe Lösung vor, dass während eines ersten Zuführungszeitraums Brühwasser an einen Brühwassereinlass (35) der Brühvorrichtung (30) gemäss einem ersten Brühwasser-Zuführungsmodus zugeführt wird, und dass während eines zweiten Zuführungszeitraums eine Brühwasser-Kenngrösse ermittelt wird, die mit dem Volumenstrom und/oder mit dem Druck des geförderten Brühwassers zusammenhängt, und unter Verwendung der Brühwasser-Kenngrösse eine Modus-Einstellgrösse für einen zweiten Brühwasser-Zuführungsmodus eingestellt wird, und dass während des zweiten Zuführungszeitraums Brühwasser an den Brühwassereinlass (35) gemäss dem zweiten Brühwasser-Zuführungsmodus zugeführt wird, wobei die Modus-Einstellgrösse zumindest einen kontinuierlichen Modus für den zweiten Brühwasser-Zuführungsmodus, in welchem das Brühwasser kontinuierlich zugeführt wird, und einen Impulsmodus für den zweiten Brühwasser-Zuführungsmodus, in welchem das Brühwasser impulsweise zugeführt wird, definiert. Das Einstellen der Modus-Einstellgrösse für den zweiten Brühwasser-Zuführungsmodus umfasst - in Abhängigkeit von der Brühwasser-Kenngrösse - zumindest eine Auswahl zwischen dem kontinuierlichen Modus für den zweiten Brühwasser-Zuführungsmodus und dem Impulsmodus für den zweiten Brühwasser-Zuführungsmodus.

## Beschreibung

Die vorliegende Erfindung betrifft ein Verfahren zum Erzeugen eines Kaffeegetränks in einer Brühvorrichtung eines Kaffeeautomaten sowie einen Kaffeeautomaten zum Durchführen des Verfahrens zum Erzeugen eines Kaffeegetränks in einer Brühvorrichtung.

Insbesondere betrifft die Erfindung ein Verfahren, bei welchem das Zuführen von Brühwasser zu einer Brühkammer der Brühvorrichtung in Abhängigkeit von einer Brühwasser-Kenngrösse impulsweise erfolgt.

Es sind Verfahren zum Erzeugen von Kaffeegetränken bekannt, bei welchen die Brühwasserpumpe eines Kaffeeautomaten, welcher zum Durchführen solcher herkömmlicher Verfahren eingerichtet ist, mit elektrischen Impulsen angesteuert wird. Aus der europäischen Patentanmeldung EP 2 570 056 A1 ist beispielsweise ein solches Verfahren bekannt. Eine Brühkammer des Kaffeeautomaten ist mit einem Crémaventil ausgestattet, welches mechanisch mittels einer Feder vorgespannt ist und im Normalzustand den Auslass der Brühkammer verschliesst. Brühwasser kann mit einem Druck von 5 bar oder mehr in die mit Kaffeepulver befüllte Brühkammer eingeleitet werden. Beim Überschreiten eines bestimmten Drucks innerhalb der Brühkammer wirkt dieser Überdruck auch auf das Crémaventil. Dieses wird entgegen der Richtung der Vorspannkraft der Feder gedrückt und gibt dadurch einen Durchlassspalt frei.

Zum Aufbauen des notwendigen Brühkammerdrucks kommt bei der EP 2 570 056 A1 eine Brühwasserpumpe zum Einsatz, beispielsweise eine Schwingkolbenpumpe. Diese Brühwasserpumpe kann gezielt mit einem pulsmodulierten Signal angesteuert werden. Hierbei wird mehrfach in schneller zeitlicher Abfolge zwischen dem Pumpenstillstand und dem vollen Wirkbetrieb der Pumpe umgeschaltet. Wie aus der EP 2 570 056 A1 weiter hervorgeht, dient dieser gepulste Betrieb der Brühwasserpumpe dazu, die effektive Förderleistung der Brühwasserpumpe zu reduzieren, um ein abruptes Öffnen des Cremaventils zu vermeiden. Der aus der EP 2 570 056 A1 bekannte gepulste Betrieb erfolgt also gemäss dem Prinzip einer zeitlichen Pulsmodulation, um die Pumpleistung zu drosseln. In dem aus der EP 2 570 056 A1 bekannten Verfahren ist es vorgesehen, dass das Brühwasser während eines Brühvorganges in jedem Fall mit im Zeitverlauf unterschiedlichen Volumenströmen zugeführt wird. Zumindest für einen dieser Volumenströme, der niedriger ist als die maximale Förderleistung der Brühwasserpumpe, ist es daher in jedem Brühvorgang zumindest während eines Teilzeitraums vorgesehen, dass die Brühwasserpumpe zeitlich pulsmoduliert angesteuert wird, um die Pumpleistung auf diesen niedrigeren Volumenstrom zu drosseln.

Des Weiteren ist die europäische Patentanmeldung EP 2 213 957 A2 auf ein Heizsystem für ein Gerät zur Heissgetränkzubereitung gerichtet, wobei das Heizsystem unter anderem eine Pumpe aufweist. In der EP 2 213 957 A2 wird auch von einem funktionalen Zusammenhang, beispielsweise von einem linearen Zusammenhang, zwischen der Fördermenge der Pumpe und der ihr zugeführten Leistung ausgegangen. Die aus der EP 2 213 957 A2 bekannte Lösung sieht u. a. vor, dass die Pumpe aufgrund dieses funktionalen Zusammenhangs zusätzlich als indirekter Durchflussmesser fungiert. Ein zusätzlich vorgesehener separater Durchflussmesser dient dazu, die Funktion der Pumpe zu überwachen, also z. B. um einen Ausfall der Pumpe zu detektieren.

Das europäische Patent EP 1 955 624 B1 offenbart eine Kaffeemaschine, die auf veränderliche Mahlgrade von Kaffeemehl reagieren kann. In der Druckschrift EP 1 955 624 B1 wurde erkannt, dass die Durchflussrate durch das Kaffeemehl einen Einfluss auf den Geschmack des zubereiteten Kaffeegetränks haben kann, und die bekannte Kaffeemaschine weist konsequenterweise einen Durchflussmengenmesser auf. Die damit während eines Zubereitungsvorgangs erfasste Durchflussmenge bzw. eine daraus abgeleitete Grösse wird bei der EP 1 955 624 B1 nur informativ an eine Bedienperson der Kaffeemaschine ausgegeben. Die Bedienperson kann anhand der angezeigten Daten den Mahlgrad der Kaffeebohnen verstellen, wobei in der EP 1 955 624 B1 gleichzeitig darauf hingewiesen wird, dass bei einer zu feinen Mahlgradeinstellung eine Verstopfung der Brühvorrichtung droht.

Aus der europäischen Patentanmeldung EP 0 245 197 A2 ist ein Verfahren zum Zubereiten von Kaffee bekannt, wobei eine automatisch verstellbare Mahleinheit zum Mahlen der Kaffeebohnen und zum Befüllen einer Brühkammer der Maschine verwendet wird. Eine vorgegebene Menge an Brühwasser wird in die Brühkammer eingeleitet, und die Durchlaufzeit der bestimmten Menge durch das Kaffeepulver wird gemessen. Anhand eines Vergleichs mit einer Soll-Durchlaufzeit wird der Mahlgrad der Mahleinheit automatisch verstellt.

Der Mahlgrad des Mahlgutes, also in der Regel der Mahlgrad des Kaffeemehls, kann einen Einfluss auf die gustatorischen Eigenschaften des erzeugten Kaffeegetränks haben. Vor allem ist es möglich, dass der optimale Mahlgradbereich bei unterschiedlichen Arten von Kaffeegetränken variiert. So ist man oft bestrebt, bei einem Espresso die Kaffeebohnen zu eher feinem Kaffeemehl zu verarbeiten (feiner Mahlgrad), während z. B. bei einem Kaffee amerikanischer Zubereitungsart ein gröberer Mahlgrad wünschenswert ist.

Typischerweise wird von einem eher feinen Mahlgrad ausgegangen, wenn im Mahlgut eine Korngrösse (Partikelgrösse) von mehr als 500 *µ*m mit einem Kornanteil von weniger als 25 Gewichts-% vorkommt. Analog wird von einem eher groben Mahlgrad ausgegangen, wenn im Mahlgut eine Korngrösse von mehr als 500 *µ*m mit einem Kornanteil von 25 Gewichts-% oder mehr vorkommt. Diese Angaben sind jedoch nur beispielhaft zu verstehen und nicht als einschränkend auszulegen.

Um ein optimales geschmackliches Ergebnis zu erzielen, kann nun eine möglichst feine Mahlung des Mahlgutes wünschenswert sein.

Die bekannten Verfahren und Vorrichtungen weisen den Nachteil auf, dass insbesondere bei sehr feiner Mahlung des Kaffeepulvers, das sich während des Brühvorganges in der Brühkammer befindet, der Wasserdruck, der zum Durchdringen dieses Kaffeepulvers erforderlich ist, sehr gross wird. Dies kann zum einen unerwünscht sein, da die Qualität des zubereiteten Kaffeegetränks dadurch sinken kann; es können sich beispielsweise geschmackliche oder sonstige Beeinträchtigungen ergeben, wenn der Brühdruck zu hoch ist.

Zum anderen ist es jedoch auch möglich, dass der maximal von der Brühwasserpumpe aufbringbare Pumpendruck nicht ausreicht, um solch fein gemahlenes und damit dicht pressbares Kaffeepulver überhaupt zu durchdringen. Es sind herkömmliche Kaffeeautomaten bekannt, welche eine Überwachung des Pumpendrucks und/oder eine Durchflussüberwachung des Brühwassers durchführen. Stellen solche herkömmlichen Kaffeeautomaten fest, dass der Pumpendruck über einen Schwellenwert ansteigt bzw. dass eine minimale Durchflussmenge an Brühwasser unterschritten wird, dann brechen sie den Brühvorgang ab und werfen ggf. das gemahlene und gepresste Kaffeemehl ungenutzt in einen Abwurfbehälter aus.

Der vorliegenden Erfindung liegt die Aufgabe zugrunde, die genannten Nachteile zu vermeiden, und insbesondere ein Verfahren zum Erzeugen eines Kaffeegetränkes in einer Brühvorrichtung oder einen Kaffeeautomaten zum Durchführen des Verfahrens anzugeben, mit welchem jeweils eine hohe Qualität eines durch den Brühvorgang erhaltenen Kaffeegetränks erzielt werden kann, und zwar bei stark unterschiedlichen Mahlgraden des Mahlguts.

Diese Aufgabe wird gelöst durch ein Verfahren mit den Merkmalen des Patentanspruches 1 bzw. durch einen Kaffeeautomaten mit den Merkmalen des Patentanspruches 13.

Die Brühvorrichtung eines Kaffeeautomaten zum Durchführen des erfindungsgemässen Verfahrens weist eine Brühkammer zum Aufnehmen von Mahlgut auf. Das Mahlgut ist insbesondere gemahlener Kaffee, der beispielsweise bei einem Kaffee-Vollautomaten von einem Mahlwerk der Brühkammer automatisch zugeführt wird. Die Brühkammer weist einen Brühwassereinlass auf, welchem Brühwasser zugeführt werden kann. Zudem weist die Brühkammer einen Kammerauslass auf, aus welchem die Extraktionsflüssigkeit austritt, die durch das Durchlaufen des Brühwassers durch die mit dem Mahlgut gefüllte Brühkammer entsteht.

Das erfindungsgemässe Verfahren weist dabei einen Verfahrensschritt auf, in welchem während eines ersten Zuführungszeitraums Brühwasser an den Brühwassereinlass zugeführt wird, und zwar gemäss einem ersten Brühwasser-Zuführungsmodus. Das Verfahren weist ausserdem die folgenden weiteren Verfahrensschritte auf, die während eines zweiten Zuführungszeitraums ausgeführt werden:
- Ermitteln einer Brühwasser-Kenngrösse, die mit dem Volumenstrom und/oder mit dem Druck des geförderten Brühwassers zusammenhängt, und Einstellen, unter Verwendung der Brühwasser-Kenngrösse, einer Modus-Einstellgrösse für einen zweiten Brühwasser-Zuführungsmodus; und
- Zuführen von Brühwasser an den Brühwassereinlass gemäss dem zweiten Brühwasser-Zuführungsmodus.

Die Modus-Einstellgrösse definiert gemäss dem erfindungsgemässen Verfahren zumindest einen kontinuierlichen Modus für den zweiten Brühwasser-Zuführungsmodus und einen Impulsmodus für den zweiten Brühwasser-Zuführungsmodus, wobei in dem kontinuierlichen Modus für den zweiten Brühwasser-Zuführungsmodus das Brühwasser kontinuierlich zugeführt wird, und wobei in dem Impulsmodus für den zweiten Brühwasser-Zuführungsmodus das Brühwasser impulsweise zugeführt wird. Das Einstellen der Modus-Einstellgrösse für den zweiten Brühwasser-Zuführungsmodus umfasst zumindest eine Auswahl zwischen dem kontinuierlichen Modus für den zweiten Brühwasser-Zuführungsmodus und dem Impulsmodus für den zweiten Brühwasser-Zuführungsmodus. Diese Auswahl erfolgt in Abhängigkeit von der Brühwasser-Kenngrösse.

Es versteht sich, dass der zweite Brühwasser-Zuführungsmodus gemäss der Einstellung der Modus-Einstellgrösse durchgeführt wird.

"Volumenstrom des geförderten Brühwassers" bezeichnet in diesem Zusammenhang die jeweils in einer vorgegebenen Zeiteinheit geförderte Menge Brühwasser pro Zeiteinheit.

In Abhängigkeit von der ermittelten Brühwasser-Kenngrösse, die mit dem Volumenstrom und/oder mit dem Druck des geförderten Brühwassers zusammenhängt, wird bei dem erfindungsgemässen Verfahren also bestimmt, ob das Zuführen von Brühwasser gemäss dem zweiten Brühwasser-Zuführungsmodus zumindest zeitweise im Impulsmodus durchgeführt wird.

Bei dem erfindungsgemässen Verfahren folgt der zweite Zuführungszeitraum auf den ersten Zuführungszeitraum. Ausserdem bezieht sich das hierin beschriebene Verfahren auf jeweils einen Erzeugungsvorgang (Brühvorgang) des Kaffeegetränks, d. h. das Verfahren wird während jeweils eines Getränkebezugs durchgeführt. Dies schliesst nicht aus, dass zum endgültigen Zubereiten des Kaffeegetränks weitere Schritte erfolgen können, beispielsweise ein Schritt, in welchem Kaffeemehl durch Mahlen erzeugt wird, das Kaffeemehl in die Brühkammer eingebracht wird und/oder gepresst wird, und dergleichen. Ausserdem ist es selbstverständlich möglich, dass das Verfahren bei unterschiedlichen Brühvorgängen, beispielsweise bei aufeinanderfolgenden Brühvorgängen in einem Kaffee-Vollautomaten, unterschiedlich durchgeführt wird, z. B. mit unterschiedlichen Verfahrensparametern.

Unter einem Impulsmodus eines Flüssigkeitstransports, beispielsweise einer Brühwasser-Zufuhr, wird ein Modus verstanden, in welchem die Flüssigkeit intervallweise transportiert wird, also eine impulsweise Zufuhr erfolgt. Ein solcher intervallweiser Flüssigkeitstransport kann beispielsweise dadurch erzielt werden, dass eine für die Beförderung der Flüssigkeit zum Einsatz kommende Pumpe wechselweise ein- und ausgeschaltet wird, also getaktet betrieben wird. Die Impulse sind bei dem Impulsmodus des Flüssigkeitstransports derart ausgestaltet, dass die geförderte Flüssigkeit einen Stoss auf das in der Brühkammer befindliche Mahlgut ausübt und/oder das in der Brühkammer befindliche Mahlgut in eine gewisse Schwingung versetzt. Insbesondere sind also die Zuführungspausen der Impulse ausreichend lang, um den Flüssigkeitstransport kurzzeitig zu unterbrechen. Ausreichend lang sind beispielsweise Zuführungspausen von mehr als 0,05 Sekunden oder von mehr als 0,1 Sekunden. Im Rahmen der hierin beschriebenen Erfindung wird ein impulsweises Zuführen ausserdem so verstanden, dass der Impulsmodus eine gewisse Mindestanzahl an Impulsen aufweist, beispielsweise mehr als drei Impulse oder mehr als fünf Impulse.

Unter einem kontinuierlichen Modus für den zweiten Brühwasser-Zuführungsmodus wird ein Modus verstanden, in welchem das Brühwasser ungepulst zugeführt wird. Ein ungepulstes Zuführen, also ein kontinuierlicher Zuführbetrieb bzw. Dauerstrichbetrieb, unterscheidet sich dahingehend von dem oben beschriebenen Impulsmodus, dass auf das Mahlgut in der Brühkammer durch das an den Brühwasser-Einlass zugeführte Brühwasser keine oder nur sehr geringfügige impulsartige Stösse entsprechend der oben erwähnten Mindestanzahl an Impulsen ausgeübt werden. Insbesondere wird im Rahmen dieser Erfindung auch ein solcher Modus als ein kontinuierlicher Modus angesehen, bei welchem eine Pumpe, die zum Zuführen des Brühwassers dient, in einem gedrosselten Modus angesteuert wird, bei welchem vergleichsweise schnelle elektrische Impulse im Rahmen einer Pulsweitenmodulations- Pumpenansteuerung zum Einsatz kommen. Bei solchen schnellen elektrischen Impulsen liegt die Frequenz typischerweise bei 50 Hz oder höher. Durch die Trägheit der Pumpe wird bei derartigen schnellen Impulsen deren Betrieb nicht unterbrochen. Vielmehr wird der geförderte Volumenstrom bei weitgehend durchgehender Förderung gedrosselt, ohne dass nennenswerte Stösse auf das Mahlgut ausgeübt werden.

Es hat sich überraschend gezeigt, dass durch eine zumindest zeitweise impulsweise Zufuhr des Brühwassers in dem zweiten Brühwasser-Zuführungsmodus auch dann ein qualitativ hochwertiges Kaffeegetränk erhalten werden kann, wenn das Mahlgut einen feinen Mahlgrad aufweist. Insbesondere kann durch das zumindest zeitweise impulsweise Zuführen ein ausreichend geringer Druck am Brühwassereinlass und/oder ein ausreichend grosser Volumenstrom durch die Brühkammer selbst bei einem sehr feinen Mahlgrad erreicht werden. Dies kann sogar dann gelten, wenn der Mahlgrad des Mahlgutes derart fein ist, dass bei einem kontinuierlichen Betrieb (Dauerstrich-Betrieb) einer Brühwasserpumpe, die für die Brühwasser-Zufuhr verwendet wird, die Leistung der Brühwasserpumpe zum Aufbauen eines zum Durchtritt des Brühwassers durch die Brühkammer erforderlichen Druckes nicht ausreichen würde.

Gemäss einem weiteren Aspekt der Erfindung ist es vorgesehen, dass die Verfahrensschritte wiederholt durchgeführt werden, die während des zweiten Zuführungszeitraums ausgeführt werden. Es wird gemäss diesem Aspekt also Folgendes in einer Schleife durchgeführt:
- Ermitteln einer Brühwasser-Kenngrösse, die mit dem Volumenstrom und/oder mit dem Druck des geförderten Brühwassers zusammenhängt, und Einstellen, unter Verwendung der Brühwasser-Kenngrösse, einer Modüs-Einstellgrösse für einen zweiten Brühwasser-Zuführungsmodus; und
- Zuführen von Brühwasser an den Brühwassereinlass (35) gemäss dem zweiten Brühwasser-Zuführungsmodus.

Das Ermitteln der Brühwasser-Kenngrösse erfolgt bei einem wiederholten Durchführen der Verfahrensschritte beispielsweise kontinuierlich oder in vorab festgelegten oder festlegbaren Intervallen. Das Einstellen der Modus-Einstellgrösse für den zweiten Brühwasser-Zuführungsmodus ist dann ein Verändern dieser Modus-Einstellgrösse unter Verwendung der Brühwasser-Kenngrösse bzw. in Abhängigkeit von der Brühwasser-Kenngrösse. Auch dieses Verändern der Modus-Einstellgrösse erfolgt z. B. kontinuierlich oder in vorab festgelegten oder festlegbaren Intervallen. Zwischen dem Einstellen der Modus-Kenngrösse und einem erneuten Ermitteln der Brühwasser-Kenngrösse, also vor einem erneuten Schleifendurchlauf, kann eine geeignete Verzögerung vorgesehen werden.

Das Zuführen von Brühwasser im zweiten Brühwasser-Zuführungsmodus erfolgt jedoch auch bei einem wiederholten Durchführen der genannten Verfahrensschritte bevorzugt durchgehend, also ohne Unterbrechung des Brühvorganges. Wenn die Modus-Einstellgrösse für den zweiten Brühwasser-Zuführungsmodus zu einem bestimmten Zeitpunkt verändert wird, wird entsprechend auch der zweite Brühwasser-Zuführungsmodus gemäss der veränderten Modus-Einstellgrösse fortgeführt.

Es kann ausserdem ein geeignetes Kriterium vorgesehen sein, bei dessen Vorliegen das wiederholte Durchführen der genannten Verfahrensschritte beendet wird, z. B. ein Abbruchkriterium für den Kaffeebezug.

Gemäss einem weiteren Aspekt der Erfindung ist vorgesehen, dass das Einstellen der Modus-Einstellgrösse für den zweiten Brühwasser-Zuführungsmodus ein Umschalten zwischen dem kontinuierlichen Modus für den zweiten Brühwasser-Zuführungsmodus und dem Impulsmodus für den zweiten Brühwasser-Zuführungsmodus in Abhängigkeit von der Brühwasser-Kenngrösse umfasst. Ein solches Umschalten kommt insbesondere dann in Betracht, wenn die oben genannten Verfahrensschritte wiederholt durchgeführt werden, wenn also die Brühwasser-Kenngrösse während eines Brühvorganges wiederholt ermittelt wird. Es ist gemäss diesem Aspekt also vorgesehen, dass selektiv zwischen dem Impulsmodus und dem kontinuierlichen Modus umgeschaltet wird, je nachdem, welche aktuellen Eigenschaften der Brühwasser-Kenngrösse ermittelt wurden.

Gemäss einem weiteren Aspekt der Erfindung ist es vorgesehen, dass in die Brühwasser-Kenngrösse ein gemessener Volumenstrom des zugeführten Brühwassers an den Brühkammer-Einlass eingeht. Im einfachsten Fall ist die Brühwasser-Kenngrösse selbst der gemessene Volumenstrom des zugeführten Brühwassers an den Brühkammer-Einlass. Die Modus-Einstellgrösse für den zweiten Brühwasser-Zuführungsmodus erfolgt dann unter Verwendung des gemessenen Volumenstroms bzw. in Abhängigkeit von dem gemessenen Volumenstrom des zugeführten Brühwassers an den Brühkammer-Einlass. Ein niedriger gemessener Volumenstrom an den Brühkammer-Einlass kann auf einen schwierigen Durchtritt des Brühwassers durch das Mahlgut innerhalb der Brühkammer hindeuten, der beispielsweise durch einen feinen Mahlgrad hervorgerufen wird.

Gemäss einem weiteren Aspekt der Erfindung ist es vorgesehen, dass in die Brühwasser-Kenngrösse ein gemessener Volumenstrom des aus dem Kammerauslass austretenden Brühwassers eingeht. Wiederum ist im einfachsten Fall die Brühwasser-Kenngrösse selbst der gemessene Volumenstrom des aus dem Kammerauslass austretenden Brühwassers. Die Modus-Einstellgrösse für den zweiten Brühwasser-Zuführungsmodus erfolgt dann unter Verwendung des gemessenen Volumenstroms des aus dem Kammerauslass austretenden Brühwassers bzw. in Abhängigkeit von dem gemessenen Volumenstrom des aus dem Kammerauslass austretenden Brühwassers. Auch hier gilt, dass ein niedriger gemessener Volumenstrom des aus dem Kammerauslass austretenden Brühwassers auf einen schwierigen Durchtritt des Brühwassers durch das Mahlgut innerhalb der Brühkammer hindeuten, der beispielsweise durch einen feinen Mahlgrad hervorgerufen wird.

Gemäss einem weiteren Aspekt der Erfindung ist es vorgesehen, dass in die Brühwasser-Kenngrösse ein gemessener Druck am Brühwasser-Einlass eingeht. Wiederum ist im einfachsten Fall die Brühwasser-Kenngrösse selbst der gemessene Druck am Brühwasser-Einlass. Die Modus-Einstellgrösse für den zweiten Brühwasser-Zuführungsmodus erfolgt dann unter Verwendung des gemessenen Drucks am Brühwasser-Einlass bzw. in Abhängigkeit von dem gemessenen Druck am Brühwasser-Einlass. In Bezug auf den gemessenen Druck gilt, dass ein hoher Druck auf einen schwierigen Durchtritt des Brühwassers durch das Mahlgut innerhalb der Brühkammer hindeuten kann, der wiederum beispielsweise durch einen feinen Mahlgrad hervorgerufen wird.

Mit den genannten Parametern, die einzeln oder auch in Kombination in die Brühwasser-Kenngrösse eingehen können, kann also das Vorliegen eines feinen Mahlgrades detektiert werden. Durch ein geeignetes Einstellen der Modus-Einstellgrösse kann dies dann zumindest teilweise kompensiert werden.

Das erfindungsgemässe Verfahren kann bei einem Kaffee-Vollautomaten zum Einsatz kommen, wie weiter unten noch beschrieben wird. Ein solcher Kaffee-Vollautomat ist mit einem Mahlwerk ausgestattet, welches geröstete Kaffeebohnen zu einem gebrauchsfertigen Mahlgut aus Kaffeemehl verarbeitet. Hierbei ist es denkbar, dass das Mahlwerk in seinem Mahlgrad manuell verstellbar oder automatisch verstellbar ausgebildet ist.

Eine automatische Mahlgradverstellung kann insbesondere dann vorteilhaft sein, wenn der Kaffee-Vollautomat eine Auswahl für das zuzubereitende Kaffeegetränk zulässt. Beispiele für auswählbare Kaffeegetränke sind Kaffee, Espresso, Ristretto, Cappuccino, Latte Macchiato. Die Auswahl ist jedoch nicht auf die genannten Beispiele beschränkt. Für die Zubereitung eines amerikanischen Kaffees kann die Maschine das automatisch verstellbare Mahlwerk z. B. auf eine gröbere Mahlung umstellen, während z. B. bei der Auswahl eines Espressos eine feinere Mahlung eingestellt wird.

Der Mahlgrad des Mahlgutes kann z. B. aus der Mahlgradeinstellung des automatisch oder manuell verstellbaren Mahlwerks abgeleitet sein. Gemäss einem weiteren Aspekt der Erfindung ist nun vorgesehen, dass der eingestellte Mahlgrad des Mahlgutes in die Brühwasser-Kenngrösse eingeht. Alternativ oder zusätzlich kann es auch vorgesehen sein, dass in die Brühwasser-Kenngrösse die eingestellte Kaffeegetränkeart eingeht, also die ausgewählte Einstellung für das zuzubereitende Kaffeegetränk.

Diese Zusatzinformationen zu dem gemessenen Volumenstrom und/oder zu dem gemessenen Volumen, also der Mahlgrad bzw. die eingestellte Kaffeegetränkeart, können dazu beitragen, die Modus-Einstellgrösse vorteilhafter einzustellen.

So kann z. B. bei einem bestimmten eingestellten Mahlgrad (z. B. bei einem fein eingestellten Mahlgrad) von Beginn des zweiten Zuführungszeitraums an gleich ein Impulsmodus eingestellt werden, der sich gut für einen solchen Mahlgrad eignet. Unter Einbeziehung der gemessenen Werte (Volumenstrom und/oder Druck) kann das Einstellen insbesondere bei einem wiederholten Durchführen der entsprechenden Verfahrensschritte an die tatsächlichen in der Brühkammer vorliegenden Verhältnisse angepasst werden.

Auf ähnliche Weise kann z. B. bei einer bestimmten eingestellten Kaffeegetränkeart ein höherer Druck und/oder ein geringerer Volumenstrom zugelassen werden als bei einer anderen, bevor der Impulsmodus eingestellt wird.

In einer vorteilhaften Weiterbildung definiert bei dem erfindungsgemässen Verfahren die Modus-Einstellgrösse zusätzlich Impulseigenschaften für den zweiten Brühwasser-Zuführungsmodus, die ein Impuls-Tastverhältnis oder einen Zeitverlauf des Impuls-Tastverhältnisses enthalten. Gemäss diesem Aspekt weist das Einstellen der Modus-Einstellgrösse ein Einstellen der Impulseigenschaften für den Impulsmodus auf.

Unter dem Impuls-Tastverhältnis wird das zeitliche Verhältnis von der Einschaltdauer zu der Ausschaltdauer der Brühwasser-Zufuhr während der Periodendauer verstanden, beispielsweise also das zeitliche Verhältnis von der Einschaltdauer zu der Ausschaltdauer einer Pumpe zur Brühwasser-Zufuhr. Es wird gemäss diesem Aspekt also das Impuls-Tastverhältnis in Abhängigkeit von der Brühwasser-Kenngrösse eingestellt. Beispielsweise kann es vorgesehen sein, dass dann, wenn die Brühwasser-Kenngrösse auf einen feinen Mahlgrad hindeutet, ein Impuls-Tastverhältnis eingestellt wird, bei welchem die Einschaltdauer und die Ausschaltdauer während der Periodendauer annähernd gleich gross sind. Ähnlich kann dann, wenn die Brühwasser-Kenngrösse auf einen gröberen Mahlgrad hindeutet, ein Impuls-Tastverhältnis eingestellt werden, bei welchem die Einschaltdauer länger ist als die Ausschaltdauer. Es ist jedoch auch möglich, bei gleichbleibender Periodendauer einen progressiven oder einen degressiven Zeitverlauf des Impuls-Tastverhältnisses vorzugeben.

Eine typische Periodendauer liegt im Bereich zwischen ca. 0,1 s und ca. 4 s. Diese Werte sind jedoch beispielhaft und nicht einschränkend zu verstehen.

Der Zeitverlauf des Impuls-Tastverhältnisses beinhaltet zusätzlich zu einer Variation des Impuls-Tastverhältnisses selbst auch eine Variation der Periodendauer über den Zeitverlauf. Hierdurch kann eine Veränderbarkeit nicht nur des Impuls-Tastverhältnisses an sich, sondern auch der Einschaltdauer während der Impulse und/oder der Pausendauer zwischen den einzelnen Impulsen erzielt werden.

So kann es vorgesehen sein, dass die Periodendauer derart verändert wird, dass sich ein progressiver oder ein degressiver Zeitverlauf der Einschaltzeiten der Impulse ergibt. Es ist auch möglich, zunächst einen progressiven Verlauf der Einschaltzeiten der Impulse vorzusehen, an welchen sich dann ein degressiver Verlauf der Einschaltzeiten der Impulse anschliesst. Ebenso ist es auch möglich, zunächst einen degressiven Verlauf der Einschaltzeiten der Impulse vorzusehen, an welchen sich dann ein progressiver Verlauf der Einschaltzeiten der Impulse anschliesst.

Auf analoge Weise ist es möglich, dass die Periodendauer derart verändert wird, dass sich ein progressiver oder ein degressiver Zeitverlauf der Pausendauern der Impulse ergibt. Es ist auch möglich, zunächst einen progressiven Verlauf der Pausendauern der Impulse vorzusehen, an welchen sich dann ein degressiver Verlauf der Pausendauern der Impulse anschliesst. Ebenso ist es auch möglich, zunächst einen degressiven Verlauf der Einschaltzeiten der Pausendauern vorzusehen, an welchen sich dann ein progressiver Verlauf der Einschaltzeiten der Pausendauern anschliesst.

Gemäss einer vorteilhaften Weiterbildung der Erfindung ist es vorgesehen, dass in Abhängigkeit von der Brühwasser-Kenngrösse einmal oder mehrere Male zwischen dem kontinuierlichen Modus und dem Impulsmodus umgeschaltet wird. Wiederum können durch die Modus-Einstellgrösse zusätzliche Impulseigenschaften für den Impulsmodus definiert werden, wie oben beschrieben. Es ist wiederum denkbar, dass die zusätzlichen Impulseigenschaften vor dem Umschalten in den Impulsmodus verändert werden, z. B. wenn während eines Brühvorganges bereits der Impulsmodus ausgewählt war, anschliessend in den kontinuierlichen Modus umgeschaltet wurde, und dann in den Impulsmodus mit veränderten Impulseigenschaften zurückgeschaltet wird. Es ist alternativ oder zusätzlich möglich, dass die zusätzlichen Impulseigenschaften verändert werden, während der zweite Brühwasser-Zuführungsmodus im Impulsmodus durchgeführt wird, wie oben bereits beschrieben. Ein Verändern der zusätzlichen Impulseigenschaften kann wiederum progressive und/oder degressive Zeitverläufe des Impuls-Tastverhältnisses, der Impuls-Pausendauer und/oder der Impuls-Einschaltzeit umfassen.

Gemäss einem weiteren Aspekt der Erfindung ist vorgesehen, dass das Einstellen der Modus-Einstellgrösse Folgendes aufweist:
- Auswählen des Impulsmodus für den zweiten Brühwasser-Zuführungsmodus, wenn der Druck am Brühwasser-Einlass einen vorab festgelegten oder festlegbaren Druck-Schwellenwert überschreitet und/oder wenn der Volumenstrom des zugeführten Brühwassers an den Brühkammer-Einlass und/oder der Volumenstrom der aus dem Kammerauslass austretenden Flüssigkeit einen vorab festgelegten oder festlegbaren Volumenstrom-Schwellenwert unterschreitet bzw. unterschreiten.

Der Impulsmodus für den zweiten Brühwasser-Zuführungsmodus wird gemäss diesem Aspekt der Erfindung also ausgewählt, wenn das Ermitteln der Brühwasser-Kenngrösse ergibt, dass der Druck am Brühwasser-Einlass einen Schwellenwert für den Druck überschreitet; alternativ oder zusätzlich wird der Impulsmodus für den zweiten Brühwasser-Zuführungsmodus gemäss diesem Aspekt der Erfindung ausgewählt, wenn das Ermitteln der Brühwasser-Kenngrösse ergibt, dass der Volumenstrom des zugeführten Brühwassers an den Brühkammer-Einlass und/oder der Volumenstrom der aus dem Kammerauslass austretenden Flüssigkeit einen Schwellenwert für den Volumenstrom unterschreitet. Sowohl ein über einem Schwellenwert liegender Druck, als auch unter einem Schwellenwert liegende Volumenströme können darauf hindeuten, dass der Brühvorgang besser durchgeführt werden kann, wenn für den zweiten Brühwasser-Zuführungsmodus der Impulsmodus gewählt wird. Die genannten Grössen, die den jeweiligen Schwellenwert über- bzw. unterschreiten, können sich z. B. durch einen sehr feinen Mahlgrad des Mahlgutes ergeben. Durch Wählen des Impulsmodus können damit verbundene Nachteile während der Brühwasser-Zufuhr verringert oder vermieden werden.

In diesem Zusammenhang ist darauf hinzuweisen, dass der erste Brühwasser-Zuführungsmodus, mit welchem initial dem Brühwassereinlass der Brühkammer eine gewisse Brühwassermenge zugeführt wird, ein ungepulster Modus sein kann oder ein Impulsmodus sein kann. Der erste Brühwasser-Zuführungsmodus ist typischerweise zeitlich begrenzt, um ein Ermitteln der Brühwasser-Kenngrösse vorzubereiten. Beispielsweise dient der erste Brühwasser-Zuführungsmodus zum ersten Druckaufbau des Brühwassers und/oder zum Herstellen eines ersten Volumenstroms von Brühwasser durch die Brühkammer. Beispielsweise ist der erste Brühwasser-Zuführungsmodus weniger als drei Sekunden lang oder weniger als fünf Sekunden lang.

Typischerweise erfolgt ein Zuführen des Brühwassers im ersten Brühwasser-Zuführungsmodus kontinuierlich (also ungepulst). Wenn - wie normalerweise üblich - eine Brühwasserpumpe zum Zuführen des Brühwassers zum Einsatz kommt, ist der ungepulste Modus z. B. ein Dauerstrichmodus der Brühwasserpumpe auf ihrer Nennleistung oder ein durchgehender Modus der Brühwasserpumpe auf einer gedrosselten Leistung.

Gemäss einem Aspekt der Erfindung ist es aber auch denkbar, im ersten Brühwasser-Zuführungsmodus das Brühwasser impulsweise dem Brühwassereinlass zuzuführen, also die Brühwasserpumpe in einem Impulsmodus zu betreiben. Der Impulsmodus des ersten Brühwasser-Zuführungsmodus ist dabei ein Modus, wie oben im Zusammenhang mit dem zweiten Brühwasser-Zuführungsmodus beschrieben, in welchem die geförderte Flüssigkeit einen Stoss auf das in der Brühkammer befindliche Mahlgut ausübt und/oder das in der Brühkammer befindliche Mahlgut in eine gewisse Schwingung versetzt. Dies kann dazu beitragen, ein verbessertes Kaffeearoma zu erzielen oder auch den Verlauf der Brühwasser-Durchströmung während des Brühvorganges zu verbessern.

Beim kontinuierlichen Zuführen des Brühwassers im ersten Brühwasser-Zuführungsmodus ist es denkbar, aber nicht notwendig, dass das Brühwasser mit den gleichen Parametern zugeführt wird wie bei einer kontinuierlichen Zufuhr während des zweiten Brühwasser-Zuführungsmodus. Solche Parameter umfassen beispielsweise die Pumpleistung (also den geförderten Volumenstrom). Ebenso ist es beim impulsweisen Zuführen des Brühwassers im ersten Brühwasser-Zuführungsmodus denkbar, aber nicht notwendig, dass das Brühwasser mit den gleichen Parametern zugeführt wird wie bei einer impulsweisen Zufuhr während des zweiten Brühwasser-Zuführungsmodus. Solche Parameter umfassen beispielsweise das Impuls-Tastverhältnis, die Impuls-Einschaltzeit und/oder die Impuls-Pausendauer.

Gemäss einem weiteren Aspekt der Erfindung weist das Einstellen der Modus-Einstellgrösse Folgendes auf:
- Auswählen des kontinuierlichen Modus für den zweiten Brühwasser-Zuführungsmodus, wenn der Druck am Brühwasser-Einlass einen vorab festgelegten oder festlegbaren Druck-Schwellenwert unterschreitet und/oder wenn der Volumenstrom des zugeführten Brühwassers an den Brühkammer-Einlass und/oder der Volumenstrom der aus dem Kammerauslass austretenden Flüssigkeit einen vorab festgelegten oder festlegbaren Volumenstrom-Schwellenwert überschreitet bzw. überschreiten.

Der kontinuierliche Modus für den zweiten Brühwasser-Zuführungsmodus wird gemäss diesem Aspekt der Erfindung also ausgewählt, wenn das Ermitteln der Brühwasser-Kenngrösse ergibt, dass der Druck am Brühwasser-Einlass ausreichend niedrig liegt, also einen Schwellenwert für den Druck nicht überschreitet; alternativ oder zusätzlich wird der kontinuierliche Modus für den zweiten Brühwasser-Zuführungsmodus gemäss diesem Aspekt der Erfindung ausgewählt, wenn das Ermitteln der Brühwasser-Kenngrösse ergibt, dass der Volumenstrom des zugeführten Brühwassers an den Brühkammer-Einlass und/oder der Volumenstrom der aus dem Kammerauslass austretenden Flüssigkeit ausreichend gross ist, also einen Schwellenwert für den Volumenstrom unterschreitet.

Sowohl ein unter einem Schwellenwert liegender Druck, als auch über einem Schwellenwert liegende Volumenströme können darauf hindeuten, dass der Brühvorgang besser durchgeführt werden kann, wenn für den zweiten Brühwasser-Zuführungsmodus der kontinuierliche Modus gewählt wird.

Vorteilhafterweise werden gemäss einem Aspekt der Erfindung die Möglichkeiten zum Einstellen der Modus-Einstellgrösse kombiniert; mit anderen Worten: Gemäss diesem Aspekt der Erfindung weist das Einstellen der Modus-Einstellgrösse Folgendes auf:
- Auswählen des Impulsmodus für den zweiten Brühwasser-Zuführungsmodus, wenn der Druck am Brühwasser-Einlass einen vorab festgelegten oder festlegbaren Druck-Schwellenwert überschreitet und/oder wenn der Volumenstrom des zugeführten Brühwassers an den Brühkammer-Einlass und/oder der Volumenstrom der aus dem Kammerauslass austretenden Flüssigkeit einen vorab festgelegten oder festlegbaren Volumen-Schwellenwert unterschreitet bzw. unterschreiten; und
- Auswählen des kontinuierlichen Modus für den zweiten Brühwasser-Zuführungsmodus, wenn der Druck am Brühwasser-Einlass den vorab festgelegten oder festlegbaren Druck-Schwellenwert unterschreitet und/oder wenn der Volumenstrom des zugeführten Brühwassers an den Brühkammer-Einlass und/oder der Volumenstrom der aus dem Kammerauslass austretenden Flüssigkeit den vorab festgelegten oder festlegbaren Volumen-Schwellenwert überschreitet bzw. überschreiten.

Es ist gemäss diesem Aspekt vorgesehen, dass während des zweiten Brühwasser-Zuführungsmodus zwischen dem Impulsmodus und dem kontinuierlichen Modus (dem ungepulsten Modus) umgeschaltet werden kann, und zwar in Abhängigkeit von der ermittelten momentanen Eigenschaft der Brühwasser-Kenngrösse, also in Abhängigkeit von dem Druck, der in die Brühwasser-Kenngrösse eingeht und/oder des Volumenstroms, der in die Brühwasser-Kenngrösse eingeht.

Beispielsweise kann es in diesem Zusammenhang vorgesehen sein, dass nach dem Übergang von dem ersten Zuführungszeitraum zum zweiten Zuführungszeitraum zunächst beim Ermitteln der Brühwasser-Kenngrösse festgestellt wird, dass der Druck-Schwellenwert überschritten wird und/oder dass der Volumenstrom-Schwellenwert unterschritten wird. Die Brühwasser-Zufuhr während des zweiten Zuführungszeitraums erfolgt dann zunächst im Impulsmodus, beispielsweise im Impulsmodus bei unveränderten zusätzlichen Impulsparametern oder im Impulsmodus bei zeitlich veränderlichen zusätzlichen Impulsparametern.

Anschliessend werden während des zweiten Zuführungszeitraums die Verfahrensschritte wiederholt ausgeführt, wonach die Brühwasser-Kenngrösse ermittelt wird und unter Verwendung in Abhängigkeit von der Brühwasser-Kenngrösse die Modus-Einstellgrösse für den zweiten Brühwasser-Zuführungsmodus eingestellt wird.

Wird nun während des zweiten Zuführungszeitraums beim Ermitteln der Brühwasser-Kenngrösse festgestellt, dass der Druck-Schwellenwert unterschritten wird und/oder dass der Volumenstrom-Schwellenwert überschritten wird, dann wird gemäss dem beschriebenen Aspekt der Erfindung durch entsprechendes Einstellen der Modus-Einstellgrösse in den kontinuierlichen Modus umgeschaltet. Dies kann dazu beitragen, die für die Kaffeezubereitung benötigte Zeit zu verkürzen.

Es ist auch ein bedarfsweises Wechseln zwischen dem kontinuierlichen Modus und dem Impulsmodus denkbar. Insbesondere ist es möglich, dass dann, wenn während des zweiten Zuführungszeitraums der kontinuierliche Zuführungsmodus durchgeführt wird und beim Ermitteln der Brühwasser-Kenngrösse festgestellt wird, dass der Druck-Schwellenwert (erneut) überschritten wird und/oder dass der Volumenstrom-Schwellenwert (erneut) unterschritten wird, (wieder) in den Impulsmodus zurückgeschaltet wird.

Gemäss einem weiteren Aspekt der Erfindung ist es möglich, dass der erste Brühwasser-Zuführungsmodus in Abhängigkeit von einem eingestellten Mahlgrad des Mahlgutes und/oder in Abhängigkeit von einer eingestellten Kaffeegetränkeart entweder einen Dauermodus oder einen Impulsmodus aufweist. Insbesondere ist es denkbar, dass dann, wenn ein feiner Mahlgrad eingestellt ist, bereits der erste Brühwasser-Zuführungsmodus im Impulsmodus durchgeführt wird. Alternativ oder zusätzlich ist es insbesondere denkbar, dass dann, wenn eine Kaffeegetränkeart eingestellt ist, bei welcher ein hoher Brühdruck und/oder ein niedriger Volumenstrom nicht wünschenswert ist, bereits der erste Brühwasser-Zuführungsmodus im Impulsmodus durchgeführt wird.

Die Impulseigenschaften des Impulsmodus für den ersten Brühwasser-Zuführungsmodus können vorab festgelegt sein, beispielsweise statisch festgelegt sein. Die Impulseigenschaften des Impulsmodus für den ersten Brühwasser-Zuführungsmodus können aber auch von einem oder mehreren Parametern abhängig gemacht werden, z. B. von dem eingestellten Mahlgrad und/oder der eingestellten Kaffeegetränkeart. In diesem Zusammenhang ist es beispielsweise möglich, eine Impuls-Einschaltdauer und/oder eine Impuls-Pausendauer und/oder ein Impuls-Tastverhältnis für den Impulsmodus des ersten Brühwasser-Zuführungsmodus von dem Parameter bzw. den Parametern abhängig zu machen.

In einem Kaffeeautomaten zum Durchführen des erfindungsgemässen Verfahrens ist eine Pumpe, vorzugsweise eine Schwingkolbenpumpe, zum Zuführen des Brühwassers zum Brühwassereinlass der Brühkammer vorgesehen, sowie eine Pumpensteuereinrichtung zum Ansteuern der Pumpe. Der Kaffeeautomat weist zudem mindestens eine Messeinrichtung auf, die dazu ausgelegt ist, eine Messgrösse zu erfassen, welche mit dem Volumenstrom und/oder mit dem Druck des von der Pumpe geförderten Brühwassers zusammenhängt. Die mindestens eine Messeinrichtung ist ausserdem dazu ausgelegt, erfasste Messwerte der Pumpensteuereinrichtung zuzuführen. Die Pumpensteuereinrichtung ist dazu ausgebildet, den ersten Brühwasser-Zuführungsmodus und den zweiten Brühwasser-Zuführungsmodus gemäss dem Verfahren durchzuführen. Die Pumpensteuereinrichtung ist ausserdem dazu ausgebildet, die Brühwasser-Kenngrösse zum Einstellen der Modus-Einstellgrösse für den zweiten Brühwasser-Zuführungsmodus aus den erfassten Messwerten von der mindestens einen Messeinrichtung abzuleiten.

Die Pumpensteuereinrichtung ist dazu ausgebildet, bei Durchführen des ersten und/oder zweiten Brühwasser-Zuführungsmodus eine entsprechende Ansteuerung der Pumpe vorzunehmen, also durch die Ansteuerung zu bewirken, dass die Pumpe im kontinuierlichen Betrieb (für eine Brühwasser-Zufuhr im kontinuierlichen Modus) oder im Impulsbetrieb (für eine Brühwasser-Zufuhr im Impulsmodus) arbeitet und/oder zwischen den genannten Betriebsarten verfahrensgemäss umschaltet.

Bevorzugt ist es vorgesehen, dass der Kaffeeautomat ein in Bezug auf den Mahlgrad manuell oder automatisch verstellbares Mahlwerk aufweist, wobei eine Mahlgrad-Gebereinrichtung vorgesehen ist, welche dazu ausgebildet ist, den eingestellten Mahlgrad der Pumpensteuereinrichtung zuzuführen.

Weitere Einzelheiten der Erfindung und insbesondere eine Ausführungsvariante des erfindungsgemässen Verfahrens werden im Folgenden anhand der beigefügten Zeichnungen näher erläutert. In den Zeichnungen zeigen:
- Fig. 1: eine schematische Darstellung eines Kaffeeautomaten zum Durchführen des hierin beschriebenen erfindungsgemässen Verfahrens, mit einer Brühwasserpumpe, einer eine Brühkammer umfassenden Brühvorrichtung und einer Kaffee-Ausgabeeinrichtung;
- Fig. 2: ein Impulssignal zum Ansteuern der Brühwasserpumpe mit einem Impulssignal gemäss einer Ausführungsform des Verfahrens;
- Fig. 3: ein Impulssignal zum Ansteuern der Brühwasserpumpe mit einem Impulssignal und einem sich anschliessenden kontinuierlichen Signal gemäss einer weiteren Ausführungsform des Verfahrens;
- Fig. 4: ein Impulssignal zum Ansteuern der Brühwasserpumpe mit einem Impulssignal mit progressivem Verlauf der Impuls-Pausendauer gemäss einer weiteren Ausführungsform des Verfahrens;
- Fig. 5: ein Impulssignal zum Ansteuern der Brühwasserpumpe mit einem Impulssignal mit degressivem Verlauf der Impuls-Pausendauer gemäss einer weiteren Ausführungsform des Verfahrens;
- Fig. 6: ein Impulssignal zum Ansteuern der Brühwasserpumpe mit einem Impulssignal mit progressiv-degressivem Verlauf der Impuls-Pausendauer gemäss einer weiteren Ausführungsform des Verfahrens;
- Fig. 7: ein Impulssignal zum Ansteuern der Brühwasserpumpe mit einem Impulssignal mit degressivem Verlauf der Impuls-Einschaltzeit gemäss einer weiteren Ausführungsform des Verfahrens;
- Fig. 8: ein Impulssignal zum Ansteuern der Brühwasserpumpe mit einem Impulssignal mit progressivem Verlauf der Impuls-Einschaltzeit gemäss einer weiteren Ausführungsform des Verfahrens;
- Fig. 9: ein Impulssignal zum Ansteuern der Brühwasserpumpe mit einem Impulssignal mit variablem Verlauf der Impuls-Einschaltzeit und der Impuls-Pausendauer sowie mit einem sich anschliessenden kontinuierlichen Signal gemäss einer weiteren Ausführungsform des Verfahrens;
- Fig. 10: eine schematische Darstellung von Druck und Durchfluss in Abhängigkeit von dem Mahlgrad, bei einem Kaffeeautomaten zum Durchführen des Verfahrens;
- Fig. 11: eine schematische Darstellung von Druck und Durchfluss im Zeitverlauf bei grobem Mahlgrad und konstanter Pumpenleistung;
- Fig. 12: eine schematische Darstellung von Druck und Durchfluss im Zeitverlauf bei feinem Mahlgrad und konstanter Pumpenleistung;
- Fig. 13: eine schematische Darstellung von Druck und Durchfluss im Zeitverlauf bei sehr feinem Mahlgrad und einem zeitweiligen Betrieb der Pumpe im Impulsmodus;
- Fig. 14: eine schematische Darstellung von Druck und Durchfluss im Zeitverlauf bei grobem Mahlgrad und Betrieb der Pumpe im Impulsmodus mit kurzer Impulsdauer;
- Fig. 15: eine schematische Darstellung von Druck und Durchfluss im Zeitverlauf bei feinem Mahlgrad und Betrieb der Pumpe im Impulsmodus mit kurzer Impulsdauer;
- Fig. 16: eine schematische Darstellung von Druck und Durchfluss im Zeitverlauf bei grobem Mahlgrad und Betrieb der Pumpe im Impulsmodus mit langer Impulsdauer;
- Fig. 17: eine schematische Darstellung von Druck und Durchfluss im Zeitverlauf bei feinem Mahlgrad und Betrieb der Pumpe im Impulsmodus mit langer Impulsdauer;
- Fig. 18: eine perspektivische schematische Ansicht eines automatisch verstellbaren Mahlwerks, zum Einsatz bei einem Kaffeeautomaten in Verbindung mit der vorliegenden Erfindung; und
- Fig. 19: eine perspektivische schematische Ansicht eines Ausschnitt eines manuell verstellbaren Mahlwerks, zum Einsatz bei einem Kaffeeautomaten in Verbindung mit der vorliegenden Erfindung.

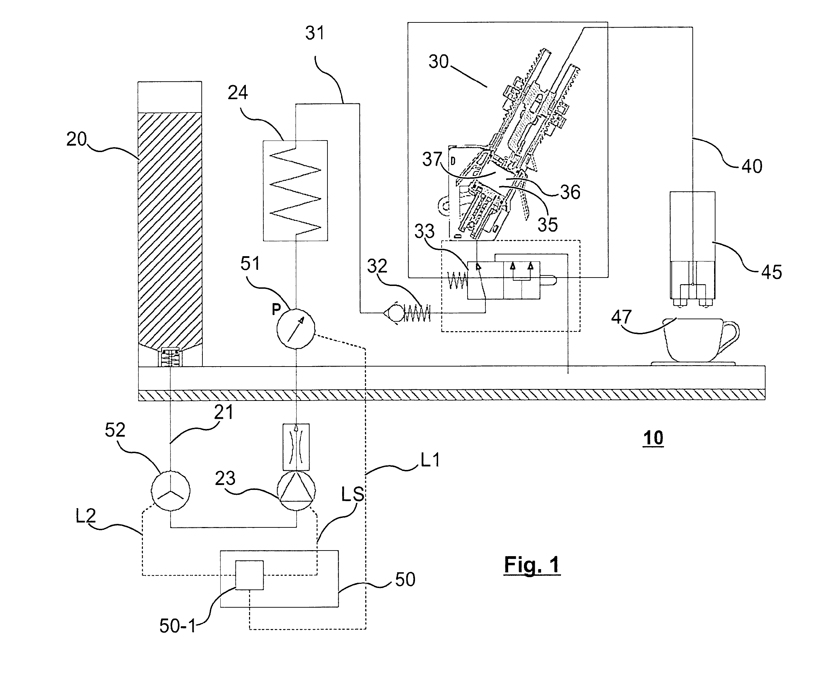

Fig. 1 zeigt eine schematische Darstellung eines Kaffeeautomaten 10 zum Durchführen des hierin beschriebenen erfindungsgemässen Verfahrens. Der Kaffeeautomat 10 weist einen Wassertank 20 auf, dessen Auslass mit einer Frischwasserleitung 21 verbunden ist, welche in den Einlass einer Brühwasserpumpe 23 mündet. Die Brühwasserpumpe 23 ist dazu ausgebildet, über eine weitere Leitung das von ihr geförderte Wasser aus dem Wassertank 20 zunächst einem Brühwassererhitzer 24 zuzuführen, welcher das Wasser auf eine gewünschte Brühtemperatur erhitzt. Die Brühtemperatur wird geeignet gewählt und kann automatisch geregelt werden. Der Auslass des Brühwassererhitzers 24 ist über eine Brühwasser-Zufuhrleitung 31, ein sich anschliessendes Rückschlagventil 32 und ein Wegeventil 33 mit dem Brühwasser-Einlass 35 einer Brühkammer 36 verbunden. Die Brühkammer 36 ist Bestandteil einer Brühvorrichtung 30 zum Bereiten eines Kaffeegetränks und während eines Brühvorganges mit Mahlgut (Kaffeemehl) gefüllt.

Über den Brühwasser-Einlass 35 in die Brühkammer 36 geführtes Brühwasser muss das Mahlgut durchdringen, bevor es aus einem Kammerauslass 37 der Brühkammer 36 austritt. Dabei reichert es sich in gewünschter Weise mit Kaffeearomen an und wird über eine Kaffee-Ausgabeleitung 40 einer Kaffee-Ausgabeeinrichtung 45 zugeführt, aus deren Kaffee-Ausgangsöffnung 47 letztendlich das Kaffeegetränk ausgegeben wird.

Zur Durchführung des erfindungsgemässen Verfahrens ist eine Steuereinheit 50 vorgesehen, welche eine Pumpen-Steuereinrichtung 50-1 aufweist. Die Pumpen-Steuereinrichtung 50-1 ist über eine Steuersignalverbindung LS mit der Brühwasserpumpe 23 verbunden, und die Pumpen-Steuereinrichtung 50-1 kann die Brühwasserpumpe 23 über die Steuersignalverbindung LS ansteuern. Das Ansteuern umfasst zur Durchführung des erfindungsgemässen Verfahrens zumindest ein Betreiben im Impulsmodus, d. h. ein Ein- und Ausschalten der Brühwasserpumpe 23 in zeitlichen Abständen.

Es ist eine Druckmesseinrichtung 51 vorgesehen, welche kontinuierlich den Wasserdruck erfasst, welcher im Leitungssystem der Brühwasser-Zufuhrleitung 31 und damit am Brühwasser-Einlass 35 der Brühkammer 36 anliegt. Sie übermittelt diesen Messwert über eine erste Messwertverbindung L1 kontinuierlich an die Pumpen-Steuereinrichtung 50-1. Es sei angemerkt, dass das Erfassen des Druckes und/oder das Übermitteln des Messwerts auch zeitdiskret in geeigneten Messintervallen erfolgen kann.

Bei der dargestellten Variante ist zwischen dem Wassertank 20 und der Brühwasserpumpe 23 ausserdem eine Durchflussmesseinrichtung 52 vorgesehen, welche die Durchflussmenge (den Volumenstrom) des durchtretenden Brühwassers kontinuierlich erfasst und diesen Messwert über eine zweite Messwertverbindung L2 kontinuierlich an die Pumpen-Steuereinrichtung 50-1 übermittelt. Es sei angemerkt, dass das Erfassen der Durchflussmenge und/oder das Übermitteln des Messwerts auch zeitdiskret in geeigneten Messintervallen erfolgen kann.

Bei anderen Varianten kann auch bloss eine der genannten Messeinrichtungen 51, 52 vorgesehen sein. Bei weiteren Varianten kann es vorgesehen sein, dass die Durchflussmesseinrichtung 52 an einer anderen Stelle vorgesehen ist, beispielsweise am Kammerauslass 37 der Brühkammer bzw. im Auslasszweig des zu erzeugenden Kaffeegetränks.

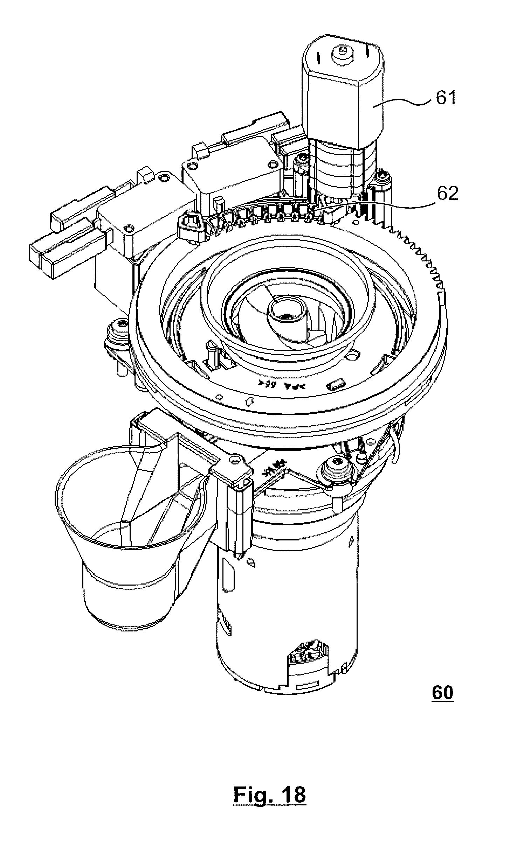

Der Kaffeeautomat 10 ist gemäss der Variante nach Fig. 1 ausserdem mit einem automatisch verstellbaren Mahlwerk 60 ausgestattet, wie es in Fig. 18 perspektivisch dargestellt ist. Das automatisch verstellbare Mahlwerk 60 weist einen Stellmotor 61 auf, welcher dazu ausgebildet ist, über ein Stellgetriebe 62 den Mahlgrad automatisch einzustellen. Es ist hierbei möglich, den Mahlgrad zwischen verschiedenen Mahlvorgängen automatisch den tatsächlichen Gegebenheiten anzupassen, beispielsweise dem Röstgrad der Kaffeebohnen oder deren Feuchtigkeitsgehalt. Es ist aber auch möglich, den Mahlgrad gemäss einer gewählten (vorgebbaren) Einstellung umzustellen. Die gewählte Einstellung kann sich auf die Angabe des Mahlgrades selbst beziehen; es kann jedoch auch eine Einstellung wählbar sein, welche sich mittelbar auf den einzustellenden Mahlgrad auswirkt, wie z. B. die Art eines auszugebenden Kaffeegetränkes.

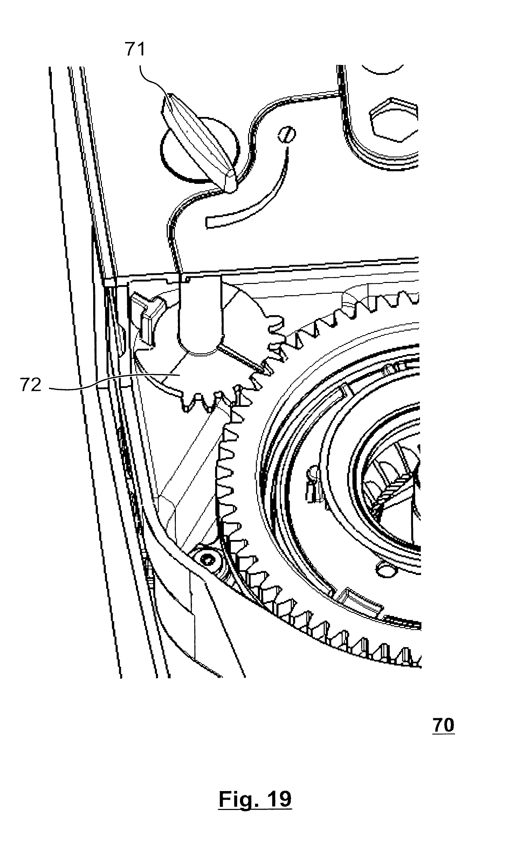

Bei anderen Varianten kann der Kaffeeautomat 10 alternativ mit einem manuell verstellbaren Mahlwerk 70 ausgestattet sein, welches in der Fig. 19 gezeigt ist. Dieses weist eine Verstelleinrichtung 71 auf, welche von einer Bedienperson verstellbar ist und mechanisch mit einem Stellgetriebe 72 verbunden ist, um den Mahlgrad einzustellen.

Ein verstellbares Mahlwerk 60, 70 ist jedoch nicht notwendig, um das erfindungsgemässe Verfahren sinnvoll durchführen zu können; so kann es auch vorgesehen sein, das erfindungsgemässe Verfahren bei Kaffeeautomaten zu verwenden, die manuell mit Kaffeepulver befüllt werden, welches unterschiedliche Mahlgrade aufweisen kann. Ausserdem kann es auch dann, wenn das Mahlwerk nicht verstellbar ausgebildet ist, zu Schwankungen des Mahlgrades kommen, z. B. dann, wenn die zu mahlenden Kaffeebohnen unterschiedliche Feuchtigkeitsgrade oder dergleichen aufweisen.

Die Ausführung des erfindungsgemässen Verfahrens wird zu Beginn eines Brühvorganges in Gang gesetzt, typischerweise nachdem die Brühkammer 36 mit frischem Kaffeemehl (Mahlgut) befüllt wurde. Diese und weitere Massnahmen, die nicht unmittelbar mit dem erfindungsgemässen Verfahren zusammenhängen, wie z. B. ein automatischer Mahlvorgang, das Befüllen der Brühkammer 36 mit Kaffeemehl, eine Messung des gesamten Kaffeevolumens während des Brühvorganges zum passenden Beenden des Vorgangs, der Auswurf des verbrauchten Kaffeekuchens und dergleichen können beispielsweise von der Steuereinheit 50 vorgenommen werden.

Zur Ausführung des erfindungsgemässen Verfahrens steuert die Pumpen-Steuerungseinrichtung 50-1 nun zunächst die Brühwasserpumpe 23 während eines ersten Zuführungszeitraums so an, dass Brühwasser gemäss einem ersten Brühwasser-Zuführungsmodus an den Brühwassereinlass 35 zugeführt wird. Der erste Zuführungszeitraum ist typischerweise relativ kurz, z. B. kürzer als drei Sekunden oder kürzer als fünf Sekunden, und er dient dazu, die Ermittlung einer Brühwasser-Kenngrösse in einem sich anschliessenden zweiten Zuführungszeitraum zu erlauben. Dieses Ermitteln erfolgt in der Regel mit Hilfe der Druckmesseinrichtung 51 und/oder mit Hilfe der Durchflussmesseinrichtung 52.

Im zweiten Zuführungszeitraum wird in einer Schleifenverarbeitung fortlaufend die Brühwasser-Kenngrösse ermittelt, eine Modus-Einstellgrösse für einen zweiten Brühwasser-Zuführungsmodus wird eingestellt, und Brühwasser wird dem Brühwassereinlass 35 gemäss dem zweiten Brühwasser-Zuführungsmodus zugeführt. Die Modus-Einstellgrösse wird bei der dargestellten Variante von der Pumpen-Steuereinrichtung 50-1 eingestellt, und zwar auf Basis der Brühwasser-Kenngrösse, welche sie aus den Messwerten von der Druckmesseinrichtung 51 und/oder von der Durchflussmesseinrichtung 52 ableitet. Die Modus-Einstellgrösse definiert zumindest einen kontinuierlichen Modus für den zweiten Brühwasser-Zuführungsmodus sowie einen Impulsmodus für den zweiten Brühwasser-Zuführungsmodus; der kontinuierliche Modus und/oder der Impulsmodus wird bzw. werden durch eine entsprechende Ansteuerung (eine kontinuierliche Ansteuerung bzw. eine gepulste Ansteuerung) der Brühwasserpumpe 23 durch die Pumpen-Steuerungseinrichtung 50-1 durchgeführt.

Bei den nachfolgend beschriebenen Varianten des erfindungsgemässen Verfahrens wird jeweils nur der Ablauf während des zweiten Zuführungszeitraums beschrieben.

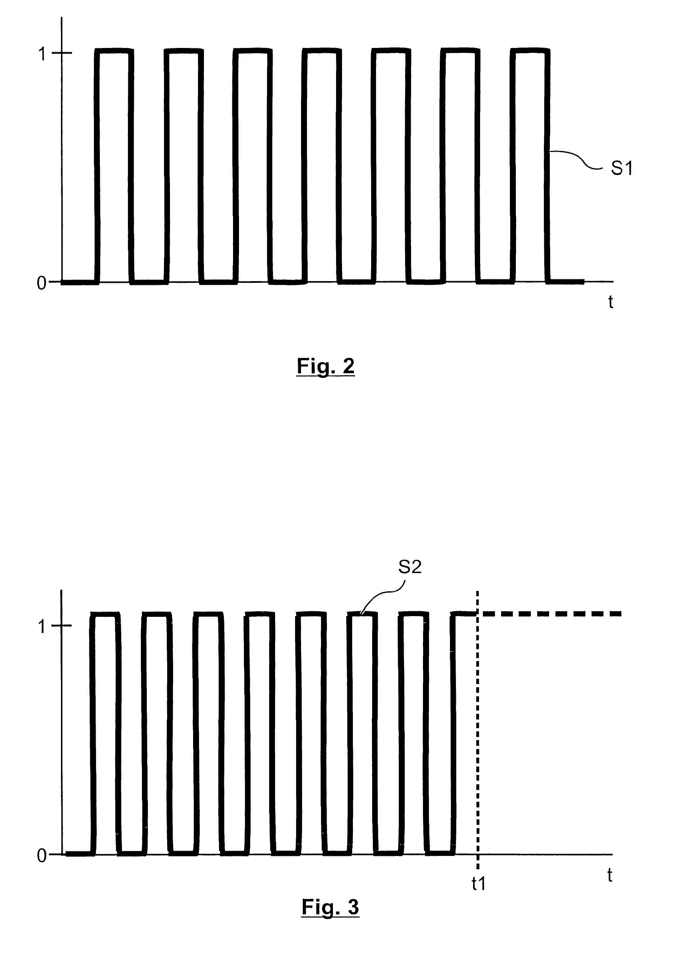

Fig. 2 zeigt den zeitlichen Verlauf eines Signals S1. Das Signal S1 wird von der Pumpen-Steuereinrichtung 50-1 erzeugt und über die Steuersignalverbindung LS der Brühwasserpumpe 23 zugeführt. Während sich das Signal S1 auf dem hohen Signalpegel befindet (dieser ist auf der Hochachse dimensionslos mit "1" bezeichnet), ist die Brühwasserpumpe 23 eingeschaltet. Entsprechend ist dann, wenn sich das Signal S1 auf dem niedrigen Signalpegel befindet (dieser ist auf der Hochachse dimensionslos mit "0" bezeichnet), die Brühwasserpumpe 23 ausgeschaltet. Die Zeitdauer eines einzelnen Einschaltzeitraums (die Impuls-Einschaltzeit) ist bei dem in Fig. 2 gezeigten Beispiel in etwa gleich der Zeitdauer eines einzelnen Ausschaltzeitraums (der Impuls-Pausenzeit). Die Impulsdauer eines einzelnen Impulses (deren Impuls-Einschaltzeit) beträgt in dem Beispiel gemäss Fig. 2 ungefähr 0.1 Sekunden.

Für den in Fig. 2 gezeigten Signalverlauf S1 wurde bei der Durchführung des erfindungsgemässen Verfahrens eine Brühwasser-Kenngrösse ermittelt, welche darauf hindeutet, dass durch ein entsprechendes impulsmässiges Ansteuern der Brühwasserpumpe 23 ein vorteilhafter Verlauf des Brühvorganges erfolgen könnte. Beispielsweise wurde festgestellt, dass der Druck-Messwert aus der Druckmesseinrichtung 51 oberhalb eines Schwellenwertes lag, oder es wurde alternativ oder zusätzlich festgestellt, dass der Volumenstrom-Messwert aus der Durchflussmesseinrichtung 52 unterhalb eines Schwellenwertes lag. Beides kann darauf hindeuten, dass der Mahlgrad des Mahlgutes innerhalb der Brühkammer 36 derart fein ist, dass ein Durchtritt des Brühwassers erschwert ist. Durch den Impulsverlauf ist es möglich, einen solchen Durchtritt zu erleichtern.

Fig. 3 zeigt den Verlauf eines Signals S2, wie es gemäss einer weiteren Alternative zum Ansteuern der Brühwasserpumpe 23 dienen kann. Im Wesentlichen gilt für das Signal S2 das im Zusammenhang mit dem Signal S1 Beschriebene. Im Unterschied dazu ist jedoch bei dem Signal S2 gemäss Fig. 3 vorgesehen, dass zu einem Zeitpunkt t1, nach einem Zeitraum im Impulsmodus, eine Brühwasser-Kenngrösse ermittelt wird, welche darauf hindeutet, dass durch einen kontinuierlichen Betrieb der Brühwasserpumpe 23 ein vorteilhafter Verlauf des Brühvorganges erfolgen könnte. Beispielsweise wurde festgestellt, dass der Druck-Messwert aus der Druckmesseinrichtung 51 wieder unter einen Schwellenwert gefallen ist, oder es wurde alternativ oder zusätzlich festgestellt, dass der Volumenstrom-Messwert aus der Durchflussmesseinrichtung 52 über einen Schwellenwert gestiegen ist. Beides kann darauf hindeuten, dass durch den vorhergehenden Impulsmodus ein Durchtritt von Brühwasser durch das Mahlgut in der Brühkammer nun auch wieder durch kontinuierliche Brühwasserzufuhr erfolgen kann. Der kontinuierliche Betrieb der Brühwasserpumpe 23 ab dem Zeitpunkt t1 ist durch eine gestrichelte Linie des Signals S8 ab diesem Zeitpunkt angedeutet.

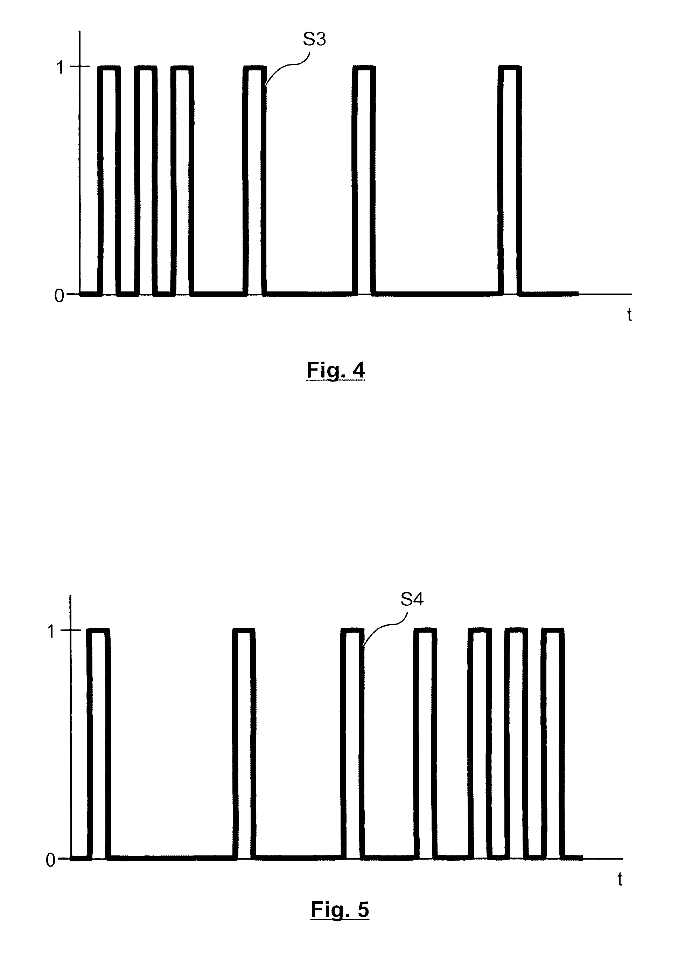

Fig. 4 zeigt analog zu den Fig. 2 und 3 einen Signalverlauf S3. Die Impuls-Einschaltzeit ist über den Signalverlauf S3 hinweg unverändert; allerdings wird die Impuls-Pausendauer nach einigen Impulsen (im gezeigten Beispiel: nach drei Impulsen) verlängert. Dies entspricht einem progressiven Zeitverlauf der Impuls-Pausendauer. Ein solcher Signalverlauf kann zu einem vorteilhaften Durchtritt von Brühwasser durch die Brühkammer 36 während des zweiten Zuführungszeitraums beitragen.

Fig. 5 zeigt analog zu den Fig. 2 bis 4 einen Signalverlauf S4. Die Impuls-Einschaltzeit ist über den Signalverlauf S4 hinweg wieder unverändert; allerdings wird die Impuls-Pausendauer im Zeitverlauf verkürzt. Dies entspricht einem degressiven Zeitverlauf der Impuls-Pausendauer. Ein solcher Signalverlauf-kann zu einem vorteilhaften Durchtritt von Brühwasser durch die Brühkammer 36 während des zweiten Zuführungszeitraums beitragen.

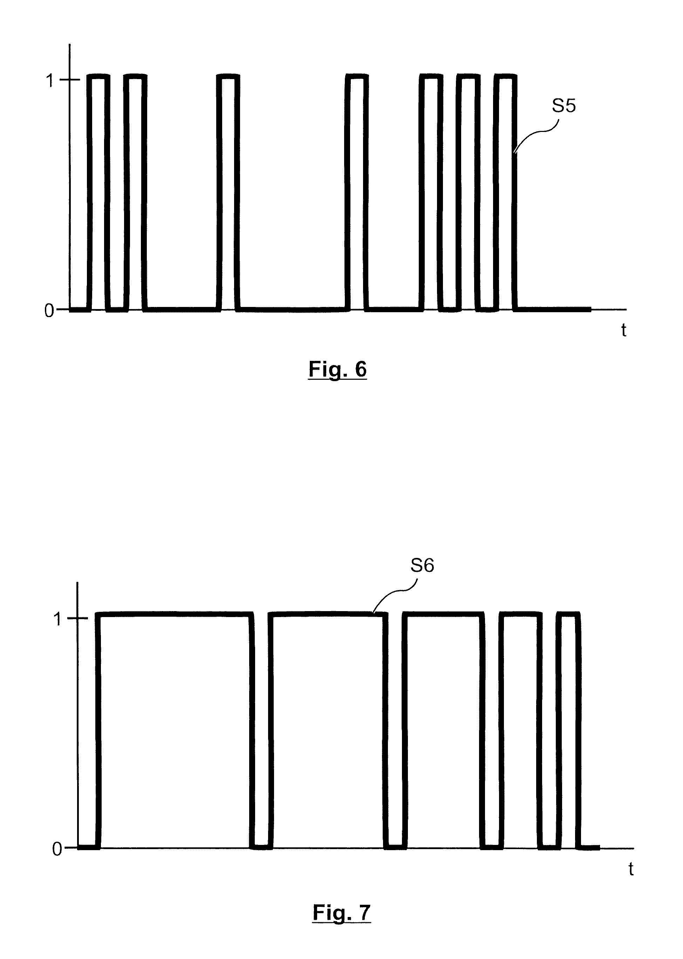

Fig. 6 zeigt analog zu den Fig. 2 bis 5 einen Signalverlauf S5. Die Impuls-Einschaltzeit ist über den Signalverlauf S5 hinweg wieder unverändert; allerdings folgt die Impuls-Pausendauer einem progressiv-degressivem Zeitverlauf. Ein solcher Signalverlauf kann zu einem vorteilhaften Durchtritt von Brühwasser durch die Brühkammer 36 während des zweiten Zuführungszeitraums beitragen.

Fig. 7 zeigt analog zu den Fig. 2 bis 6 einen Signalverlauf S6. Die Impuls-Pausendauer ist über den Signalverlauf S6 hinweg unverändert. Die Impuls-Einschaltzeit wird über den Signalverlauf S6 allerdings verkürzt, was einem degressiven Zeitverlauf der Impuls-Einschaltzeit entspricht. Ein solcher Signalverlauf kann zu einem vorteilhaften Durchtritt von Brühwasser durch die Brühkammer 36 während des zweiten Zuführungszeitraums beitragen.

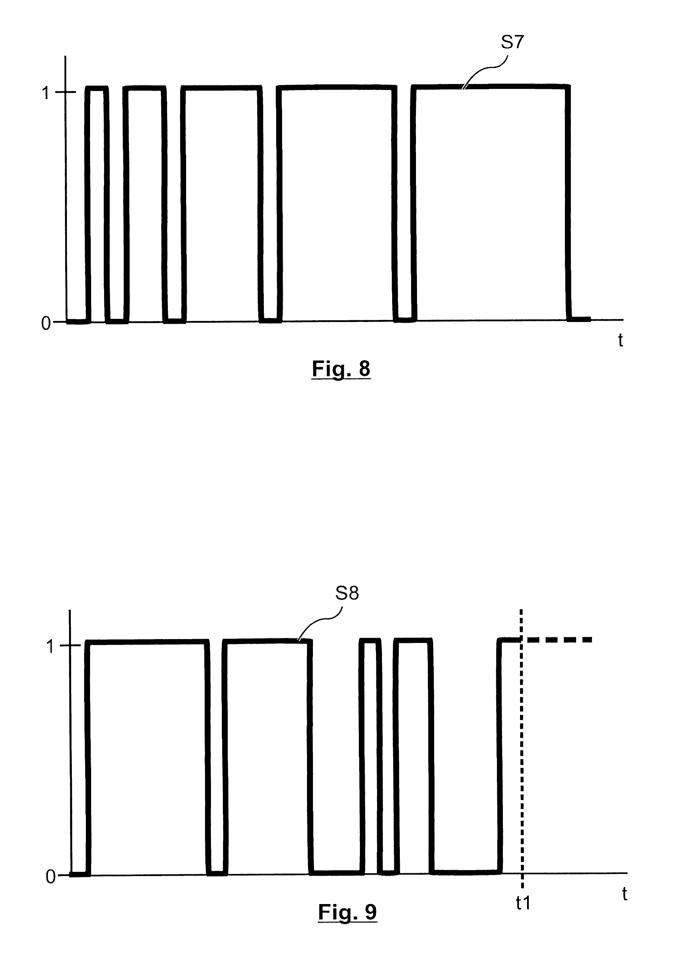

Fig. 8 zeigt analog zu den Fig. 2 bis 7 einen Signalverlauf S7. Die Impuls-Pausendauer ist über den Signalverlauf S7 hinweg unverändert. Die Impuls-Einschaltzeit wird über den Signalverlauf S6 allerdings verlängert, was einem progressiven Zeitverlauf der Impuls-Einschaltzeit entspricht. Ein solcher Signalverlauf kann zu einem vorteilhaften Durchtritt von Brühwasser durch die Brühkammer 36 während des zweiten Zuführungszeitraums beitragen.

Fig. 9 zeigt analog zu den Fig. 2 bis 8 einen Signalverlauf S8. Bei dem Signalverlauf S8 werden sowohl die Impuls-Einschaltzeit, als auch die Impuls-Pausendauer über den Zeitverlauf hinweg verändert (mehrfach variabler Impulsmodus). Ausserdem gilt, analog zu dem Signalverlauf S2, der in Fig. 3 gezeigt ist, dass zu einem Zeitpunkt t1, nach einem Zeitraum in dem oben beschriebenen mehrfach variablen Impulsmodus eine Brühwasser-Kenngrösse ermittelt wird, welche darauf hindeutet, dass durch einen kontinuierlichen Betrieb der Brühwasserpumpe 23 ein vorteilhafter Verlauf des Brühvorganges erfolgen könnte. Ab dem Zeitpunkt t1 erfolgt daher bei dem Signalverlauf S8 ein kontinuierlicher Betrieb der Brühwasserpumpe 23, was durch die gestrichelte Linie in Fig. 9 angedeutet ist. Ein solcher Signalverlauf kann zu einem vorteilhaften Durchtritt von Brühwasser durch die Brühkammer 36 während des zweiten Zuführungszeitraums beitragen.

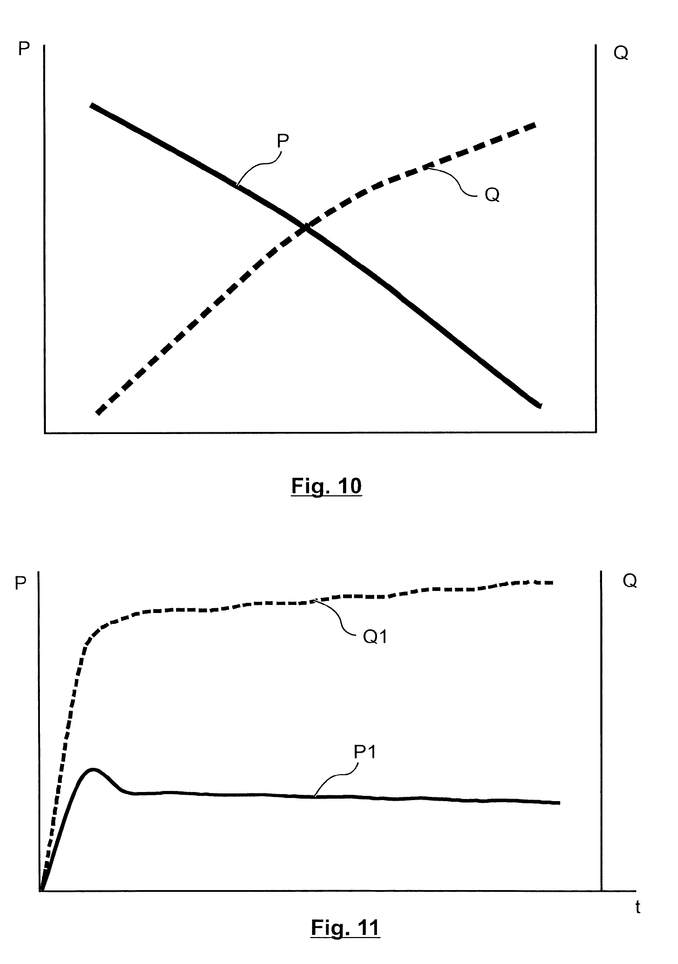

Aus Gründen der Übersichtlichkeit und zur besseren Vergleichbarkeit sind die schematischen Diagramme in den Fig. 10 bis 17 als Diagramme mit doppelten Hochachsen gezeigt, und in den Diagrammen sind jeweils sowohl der Druck bzw. der zeitliche Druckverlauf, als auch der Durchfluss (Volumenstrom) bzw. der zeitliche Verlauf des Durchflusses dargestellt. Die Kurven, welche den Druck bzw. den Druckverlauf zeigen, sind mit durchgezogenen Linien dargestellt und mit P bzw. P1 bis P7 bezeichnet. Entsprechend sind die Kurven, welche den Durchfluss bzw. den Durchflussverlauf zeigen, mit gestrichelten Linien dargestellt und mit Q bzw. Q1 bis Q7 bezeichnet. Obwohl keine Massstäbe für die Achsen des Drucks (P) oder für die Achsen des Durchflusses (Q) angegeben sind, sind die relativen Darstellungen der Druckverläufe bzw. der Durchflussverläufe zwischen den einzelnen Diagrammen vergleichbar.

Fig. 10 zeigt eine schematische Darstellung von Druck P und Durchfluss Q in Abhängigkeit von dem Mahlgrad, wenn die Pumpenleistung über den gesamten Brühvorgang hinweg konstant ist. Das erfindungsgemässe Verfahren wird also bei einem Kurvenverlauf gemäss Fig. 10 nicht angewendet. Die Kurven verlaufen von links nach rechts von einem feinen Mahlgrad zu einem groben Mahlgrad. Wie zu erkennen ist, ist der Druck bei einem feinen Mahlgrad und konstanter Pumpenleistung hoch, um hin zu einem gröberen Mahlgrad abzunehmen. Die Kurve für den Durchfluss ist gegenläufig: Bei einem feinen Mahlgrad ist der Durchfluss gering, um hin zu einem gröberen Mahlgrad zuzunehmen.

Fig. 11 zeigt nun eine schematische Darstellung von Druck und Durchfluss im Zeitverlauf bei grobem Mählgrad und über den gesamten Brühvorgang hinweg konstanter Pumpenleistung, also ohne dass das erfindungsgemässe Verfahren zum Einsatz kommt. Der Druck P1 nimmt im zeitlichen Verlauf zu, bis ein gewisser Wert überschritten ist, fällt dann leicht ab und ist über den weiteren Zeitverlauf des Brühvorgangs hinweg im Wesentlichen konstant. Die Durchflussmenge Q1 nimmt ebenfalls erst zu, um auch im Wesentlichen konstant zu sein. Für den gezeigten gröberen Mahlgrad des Mahlgutes zeigen diese Kurven einen wünschenswerten Verlauf.

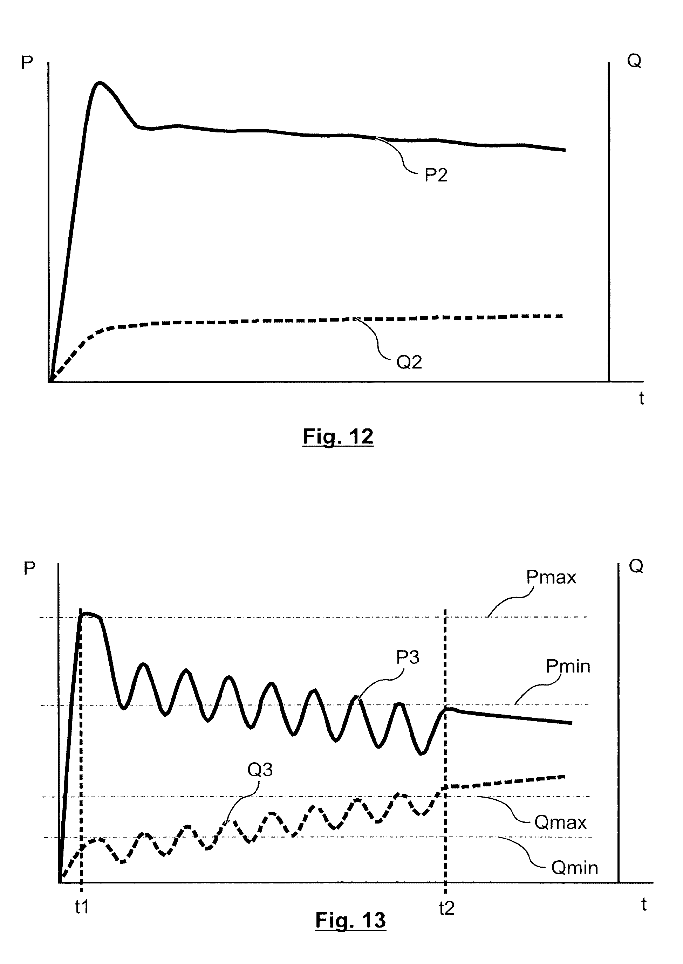

Analog zu Fig. 11 zeigt Fig. 12 eine schematische Darstellung von Druck und Durchfluss im Zeitverlauf bei feinem Mahlgrad und über den gesamten Brühvorgang hinweg konstanter Pumpenleistung, also wiederum ohne dass das erfindungsgemässe Verfahren zum Einsatz kommt. Bei einem feinen Mahlgrad kann das verwendete Kaffeemehl in der Brühkammer 36 wesentlich stärker komprimiert werden, so dass der Durchtritt von Brühwasser erschwert ist: Der Druck P2 nimmt im zeitlichen Verlauf wesentlich stärker als in dem Fall der Fig. 11 zu; die Durchflussmenge Q2 bleibt entsprechend gering.

Fig. 13 zeigt nun eine schematische Darstellung von Druck und Durchfluss im Zeitverlauf bei sehr feinem Mahlgrad und einem zeitweiligen Betrieb der Pumpe im Impulsmodus gemäss dem erfindungsgemässen Verfahren. Der Mahlgrad ist hier noch feiner als bei der in Fig. 12 gezeigten Kurve. Es hat sich gezeigt, dass bei einem derart feinen Mahlgrad, wie er für einen Brühverlauf gemäss den in der Fig. 13 gezeigten Signalen zum Einsatz kommt, der Druck exzessiv hoch würde, bevor es überhaupt zu einem Durchtritt von Brühwasser durch die Brühkammer 36 käme.

In Fig. 13 geben Qmin und Qmax nun einen unteren Schwellenwert bzw. einen oberen Schwellenwert für den Durchfluss Q an; entsprechend geben Pmin und Pmax einen unteren Schwellenwert bzw. einen oberen Schwellenwert für den Druck P an.

Zu Beginn des Brühvorganges, bis zu dem Zeitpunkt, der in Fig. 13 mit t1 bezeichnet ist, wird die Brühwasserpumpe 23 kontinuierlich betrieben. Dies entspricht dem ersten Zuführungszeitraum. Anschliessend übermittelt die Druckmesseinrichtung 51 an die Pumpen-Steuerungseinrichtung 50-1 einen Messwert, der oberhalb des oberen Schwellenwertes Pmax für den Druck liegt. Gleichzeitig übermittelt die Durchflussmesseinrichtung 52 an die Pumpen-Steuerungseinrichtung 50-1 einen Messwert, der unterhalb des unteren Schwellenwertes Qmin für den Durchfluss liegt.

Hieraus leitet die Pumpen-Steuerungseinrichtung 50-1, die sich ab dem Zeitpunkt t1 im zweiten Zuführungszeitraum befindet, eine Brühwasser-Kenngrösse ab, welche darauf hindeutet, dass ein Betrieb im Impulsmodus vorteilhaft ist. Die Pumpen-Steuerungseinrichtung 50-1 stellt demnach die Modus-Einstellgrösse so ein, dass das Zuführen des Brühwassers in einem Impulsmodus erfolgt, welcher hier dem zweiten Brühwasser-Zuführungsmodus des Verfahrens entspricht.

Das impulsweise Zuführen ist durch die Schwankungen des Druckverlaufs P3 und des Verlaufs Q3 für den Durchfluss in Fig. 13 erkennbar. Es wird davon ausgegangen, dass durch das Betreiben im Impulsmodus auf das Mahlgut gewisse Stösse ausgeübt werden, welche das Mahlgut nach und nach lockern und das Hindurchtreten von Brühwasser erleichtern. Währenddessen wird die Brühwasser-Zuführung im Impulsmodus fortgesetzt und fortlaufend die Brühwasser-Kenngrösse anhand der Messdaten von den Messeinrichtungen 51 und 52 neu bewertet.

Ein ausreichender Lockerungszustand wird zum Zeitpunkt t2 dadurch erkannt, dass das Messsignal Q3 einen oberen Schwellenwert Qmax für den Durchfluss überschreitet und das Messsignal P3 einen unteren Schwellenwert Pmin für den Druck unterschreitet.

Die Pumpen-Steuerungseinrichtung 50-1 stellt demnach die Modus-Einstellgrösse so ein, dass ab dem Zeitpunkt t2 das Zuführen des Brühwassers im kontinuierlichen Modus erfolgt. Dadurch kann der weitere Kaffeebezug beschleunigt werden.

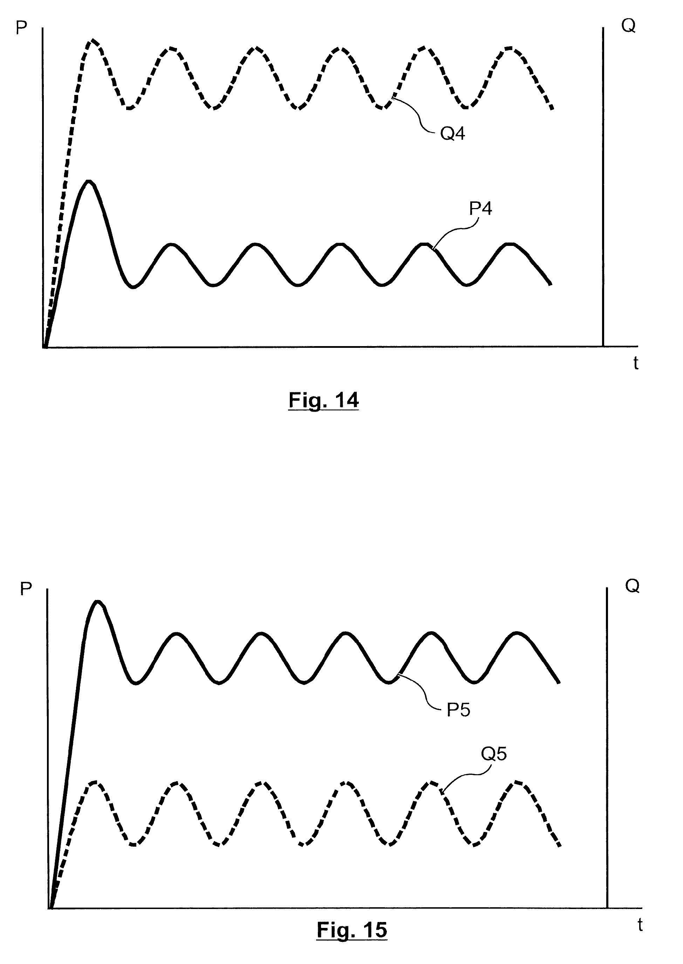

Fig. 14 zeigt eine schematische Darstellung von Druck P4 und Durchfluss Q4 im Zeitverlauf bei grobem Mahlgrad und Betrieb der Pumpe im Impulsmodus mit kurzer Impulsdauer. Im dargestellten Fall der Fig. 14 und 15 finden gleichförmige Impulse Verwendung, bei welchen die Impuls-Einschaltdauer und die Impuls-Pausendauer gleich lang sind. Die Einschaltdauer und die Pausendauer der Impulse bei kurzer Impulsdauer betragen jeweils ungefähr 0,1 bis 0,2 Sekunden. Analog zu Fig. 14 zeigt Fig. 15 eine schematische Darstellung von Druck P5 und Durchfluss Q5 im Zeitverlauf bei feinem Mahlgrad und Betrieb der Pumpe im Impulsmodus mit kurzer Impulsdauer. Es zeigt sich, dass trotz feinen Mahlgrads ein Durchfluss Q5 gegeben ist, wenn die Brühwasser-Zufuhr im zweiten Zuführungszeitraum mit kurzen Impulsen erfolgt.

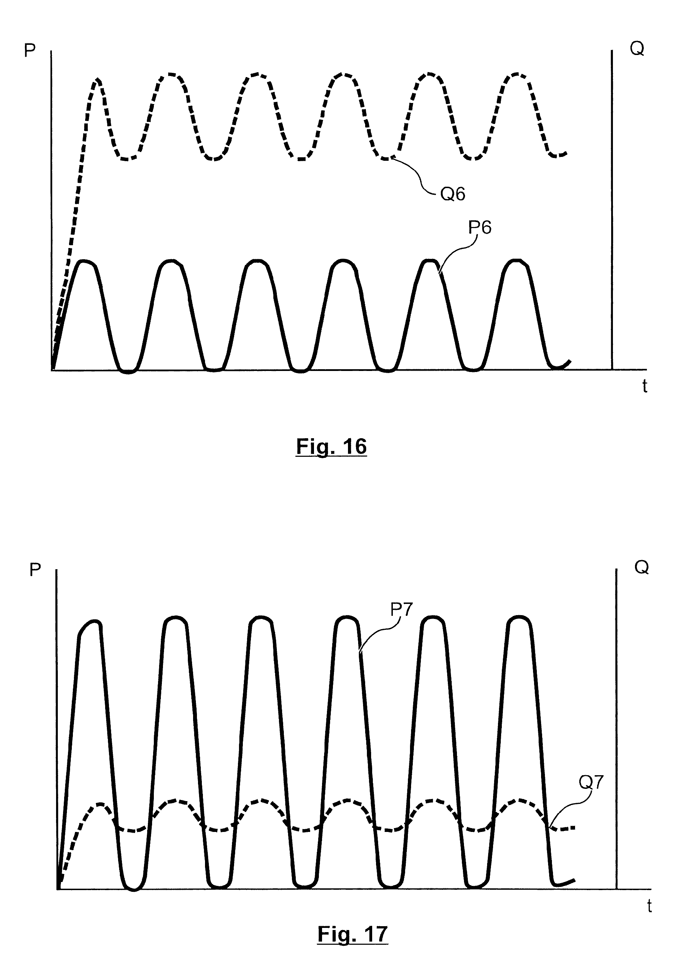

Fig. 16 zeigt analog zu den Fig. 14 und 15 eine schematische Darstellung von Druck P6 und Durchfluss Q6 im Zeitverlauf bei grobem Mahlgrad und Betrieb der Pumpe im Impulsmodus mit langer Impulsdauer. Im dargestellten Fall der Fig. 16 und 17 finden gleichförmige Impulse Verwendung, bei welchen die Impuls-Einschaltdauer und die Impuls-Pausendauer gleich lang sind. Bei einer langen Impulsdauer betragen die Einschaltdauer und die Pausendauer der Impulse jeweils bis zu ungefähr 2 Sekunden. Es zeigt sich, dass hier der Druck P6 in den Impulspausen zwar stärker abfällt als bei den kurzen Impulsen gemäss Fig. 14; dennoch ist ein ausreichender Durchfluss Q6 auch bei langen Impulsen gegeben. Fig. 17 zeigt schliesslich analog zu Fig. 16 eine schematische Darstellung von Druck P7 und Durchfluss Q7 im Zeitverlauf bei feinem Mahlgrad und Betrieb der Pumpe im Impulsmodus mit langer Impulsdauer. Die Druckschwankungen sind wiederum stark; dennoch ergibt sich auch hier ein zuverlässiger Durchfluss Q7 über den Zeitverlauf.

## Patentansprüche

1. Verfahren zum Erzeugen eines Kaffeegetränks in einer Brühvorrichtung (30) eines Kaffeeautomaten (10),
wobei die Brühvorrichtung (30) eine Brühkammer (36) zum Aufnehmen von Mahlgut, insbesondere von gemahlenem Kaffee, aufweist,
wobei die Brühkammer (36) einen Brühwassereinlass (35) und einen Kammerauslass (37) aufweist,
wobei das Verfahren die folgenden Verfahrensschritte aufweist:
a) Während eines ersten Zuführungszeitraums: Zuführen von Brühwasser an den Brühwassereinlass (35) gemäss einem ersten Brühwasser-Zuführungsmodus;
b) Während eines zweiten Zuführungszeitraums:
b1) Ermitteln einer Brühwasser-Kenngrösse, die mit dem Volumenstrom und/oder mit dem Druck des geförderten Brühwassers zusammenhängt, und Einstellen, unter Verwendung der Brühwasser-Kenngrösse, einer Modus-Einstellgrösse für einen zweiten Brühwasser-Zuführungsmodus;
b2) Zuführen von Brühwasser an den Brühwassereinlass (35) gemäss dem zweiten Brühwasser-Zuführungsmodus,
wobei die Modus-Einstellgrösse zumindest einen kontinuierlichen Modus für den zweiten Brühwasser-Zuführungsmodus, in welchem das Brühwasser kontinuierlich zugeführt wird, und einen Impulsmodus für den zweiten Brühwasser-Zuführungsmodus, in welchem das Brühwasser impulsweise zugeführt wird, definiert und
wobei das Einstellen der Modus-Einstellgrösse für den zweiten Brühwasser-Zuführungsmodus zumindest eine Auswahl zwischen dem kontinuierlichen Modus für den zweiten Brühwasser-Zuführungsmodus und dem Impulsmodus für den zweiten Brühwasser-Zuführungsmodus in Abhängigkeit von der Brühwasser-Kenngrösse umfasst.

2. Verfahren nach Anspruch 1,
wobei die Verfahrensschritte b1) bis b2) wiederholt durchgeführt werden.

3. Verfahren nach Anspruch 2,
wobei das Einstellen der Modus-Einstellgrösse für den zweiten Brühwasser-Zuführungsmodus ein Umschalten zwischen dem kontinuierlichen Modus für den zweiten Brühwasser-Zuführungsmodus und dem Impulsmodus für den zweiten Brühwasser-Zuführungsmodus in Abhängigkeit von der Brühwasser-Kenngrösse umfasst.

4. Verfahren nach einem der vorhergehenden Ansprüche,
wobei in die Brühwasser-Kenngrösse ein gemessener Volumenstrom des zugeführten Brühwassers an den Brühkammer-Einlass und/oder ein gemessener Volumenstrom des aus dem Kammerauslass austretenden Brühwassers eingeht.

5. Verfahren nach einem der vorhergehenden Ansprüche,
wobei in die Brühwasser-Kenngrösse ein gemessener Druck am Brühwasser-Einlass (35) eingeht.

6. Verfahren nach einem der vorhergehenden Ansprüche,
wobei in die Brühwasser-Kenngrösse ein eingestellter Mahlgrad des Mahlgutes eingeht.

7. Verfahren nach einem der vorhergehenden Ansprüche,
wobei in die Brühwasser-Kenngrösse eine eingestellte Kaffeegetränkeart eingeht.

8. Verfahren nach einem der vorhergehenden Ansprüche, wobei die Modus-Einstellgrösse zusätzlich Impulseigenschaften für den zweiten Brühwasser-Zuführungsmodus definiert, die ein Impuls-Tastverhältnis oder einen Zeitverlauf des Impuls-Tastverhältnisses enthalten, und wobei das Einstellen der Modus-Einstellgrösse ein Einstellen der Impulseigenschaften für den Impulsmodus aufweist.

9. Verfahren nach Anspruch 8, wobei beim Einstellen der Impulseigenschaften für den Impulsmodus einer von folgenden Zeitverläufen vorgegeben wird:
- progressiver Zeitverlauf des Impuls-Tastverhältnisses;
- degressiver Zeitverlauf des Impuls-Tastverhältnisses;
- progressiver Zeitverlauf der Impuls-Pausendauer;
- degressiver Zeitverlauf der Impuls-Pausendauer;
- progressiver Zeitverlauf der Impuls-Einschaltzeit;
- degressiver Zeitverlauf der Impuls-Einschaltzeit;
- progressiv-degressiver Zeitverlauf des Impuls-Tastverhältnisses;
- progressiv-degressiver Zeitverlauf der Impuls-Pausendauer;
- degressiv-progressiver Zeitverlauf des Impuls-Tastverhältnisses;
- degressiv-progressiver Zeitverlauf der Impuls-Pausendauer.

10. Verfahren nach einem der vorhergehenden Ansprüche, wobei das Einstellen der Modus-Einstellgrösse Folgendes aufweist:
- Auswählen des Impulsmodus für den zweiten Brühwasser-Zuführungsmodus, wenn der Druck am Brühwasser-Einlass (35) einen vorab festgelegten oder festlegbaren Druck-Schwellenwert überschreitet und/oder wenn der Volumenstrom des zugeführten Brühwassers an den Brühkammer-Einlass und/oder der Volumenstrom der aus dem Kammerauslass austretenden Flüssigkeit einen vorab festgelegten oder festlegbaren Volumenstrom-Schwellenwert unterschreitet bzw. unterschreiten.

11. Verfahren nach einem der vorhergehenden Ansprüche, wobei das Einstellen der Modus-Einstellgrösse Folgendes aufweist:
Auswählen des kontinuierlichen Modus für den zweiten Brühwasser-Zuführungsmodus, wenn der Druck am Brühwasser-Einlass (35) einen vorab festgelegten oder festlegbaren Druck-Schwellenwert unterschreitet und/oder wenn der Volumenstrom des zugeführten Brühwassers an den Brühkammer-Einlass und/oder der Volumenstrom der aus dem Kammerauslass austretenden Flüssigkeit einen vorab festgelegten oder festlegbaren Volumenstrom-Schwellenwert überschreitet bzw. überschreiten.

12. Verfahren nach einem der vorhergehenden Ansprüche, wobei der erste Brühwasser-Zuführungsmodus in Abhängigkeit von einem eingestellten Mahlgrad des Mahlgutes und/oder in Abhängigkeit von einer eingestellten Kaffeegetränkeart entweder einen Dauermodus oder einen Impulsmodus aufweist.

13. Kaffeeautomat (10) zum Durchführen des Verfahrens nach einem der vorhergehenden Ansprüche, wobei der Kaffeeautomat Folgendes aufweist:
- eine Pumpe (23), vorzugsweise eine Schwingkolbenpumpe, zum Zuführen des Brühwassers zum Brühwassereinlass (35-1) der Brühkammer (36);
- eine Pumpensteuereinrichtung (50-1) zum Ansteuern der Pumpe (23); und
- mindestens eine Messeinrichtung (51, 52), die dazu ausgelegt ist, eine Messgrösse zu erfassen, welche mit dem Volumenstrom und/oder mit dem Druck des von der Pumpe (23) geförderten Brühwassers zusammenhängt, und die dazu ausgelegt ist, erfasste Messwerte der Pumpensteuereinrichtung (50-1) zuzuführen,
wobei die Pumpensteuereinrichtung (50-1) dazu ausgebildet ist, den ersten Brühwasser-Zuführungsmodus und den zweiten Brühwasser-Zuführungsmodus gemäss dem Verfahren durchzuführen, und
wobei die Pumpensteuereinrichtung (50-1) dazu ausgebildet ist, die Brühwasser-Kenngrösse zum Einstellen der Modus-Einstellgrösse für den zweiten Brühwasser-Zuführungsmodus aus den erfassten Messwerten von der mindestens einen Messeinrichtung (51, 52) abzuleiten.

14. Kaffeeautomat (10) nach Anspruch 13,
wobei der Kaffeeautomat (10) ein in Bezug auf den Mahlgrad manuell oder automatisch verstellbares Mahlwerk aufweist, und wobei eine Mahlgrad-Gebereinrichtung vorgesehen ist, welche dazu ausgebildet ist, den eingestellten Mahlgrad der Pumpensteuereinrichtung (50-1) zuzuführen.
